(19) **Europäisches Patentamt**
**European Patent Office**
**Office européen des brevets**

(11) **EP 2 202 259 B1**

(12) **EUROPEAN PATENT SPECIFICATION**

(45) Date of publication and mention
of the grant of the patent:
**29.02.2012 Bulletin 2012/09**

(51) Int Cl.:
*C08G 63/78* (2006.01)    *C08G 63/183* (2006.01)

(21) Application number: **10152497.3**

(22) Date of filing: **31.08.2006**

(54) **Method of multistage solid-phase polycondensation of polyethylene terephthalate**

Verfahren zur mehrstufigen Festphasenpolykondensation von Polyethylenterephthalat

Procédé de polycondensation à phase solide en plusieurs étapes de téréphtalate en polyéthylène

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **01.09.2005 JP 2005253286
07.09.2005 JP 2005259383
21.09.2005 JP 2005273293
08.05.2006 JP 2006129284**

(43) Date of publication of application:
**30.06.2010 Bulletin 2010/26**

(62) Document number(s) of the earlier application(s) in
accordance with Art. 76 EPC:
**06797220.8 / 1 939 238**

(73) Proprietor: **MITSUBISHI CHEMICAL
CORPORATION
Tokyo 108-0014 (JP)**

(72) Inventors:
• **Kimura, Hisashi
Mie 510-8530 (JP)**
• **Yoshida, Michiko
Mie 510-8530 (JP)**

(74) Representative: **HOFFMANN EITLE
Patent- und Rechtsanwälte
Arabellastraße 4
81925 München (DE)**

(56) References cited:
**WO-A1-2004/058852**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a method of producing a high-molecular-weight polyethylene terephthalate by treating a low-molecular-weight polyethylene terephthalate in a solid state with heat, and more specifically, to (1) a method of producing a high-molecular-weight polyethylene terephthalate at a high speed by performing.solid-phase polycondensation involving treating a low-molecular-weight polyethylene terephthalate, prepolymer under specific conditions with heat in stages and (2) a method by which a high-molecular-weight polyethylene terephthalate can be produced within a shorter time period than that in the case of an ordinary method by treating a low-molecular-weight polyethylene terephthalate prepolymer under specific conditions with heat in stages to perform a solid-phase polycondensation reaction.

Because polyesters typified by a polyethylene terephthalate (which may hereinafter be abbreviated as "PET") are each excellent in, for example, mechanical, thermal, and electrical properties, the polyesters are widely used in fibers and molded articles in various applications such as a film, a sheet, and a bottle, and a demand for the polyesters has been growing.

Further, in the case of a PET, a required molecular weight (intrinsic viscosity) varies depending on the applications of the PET. For example, in ordinary cases, the intrinsic viscosity is 0.70 to 0.95 dL/g for a bottle, or is 0.95 to 1.20 dL/g for a tire cord.

Accordingly, the molecular weight (intrinsic viscosity) must be increased to a predetermined level in order that moldability and mechanical characteristics needed for the above applications may be derived from the PET. A method involving performing the solid-phase polycondensation of a PET prepolymer obtained by the melt polycondensation of a polyethylene terephthalate raw material subsequent to the melt polycondensation to turn the prepolymer into a polymer has been widely employed as a method on an industrial scale. The solid-phase polycondensation is typically performed by treating a PET prepolymer obtained by melt polycondensation with heat under an inert gas atmosphere or reduced pressure, but requires a relatively long time period for polymerization of the prepolymer to reach a predetermined molecular weight, so a production method additionally excellent in productivity has been desired. A method involving performing melt polycondensation to provide a PET prepolymer having a relatively low degree of polymerization and thereafter performing the solid-phase polycondensation of the prepolymer at a high temperature has been proposed as such method.

For example, Patent Document 1 discloses a method involving crystallizing a low-molecular-weight prepolymer having an average degree of polymerization of about 5 to 35 (an intrinsic viscosity of about 0.10 to 0.36 dL/g) obtained by melt polycondensation so that an apparent crystallite size is 9 nm or more and performing the solid-phase polycondensation of the crystal. However, according to our investigation, a satisfactory solid-phase polycondensation reaction rate cannot always be obtained by the method probably because a degree of polymerization at the time of the initiation of the solid-phase polycondensation is excessively low or the crystal grows to suppress the movement of a molecule of the prepolymer.

In addition, Patent Document 2 discloses that the solid-phase polycondensation of particles each composed of a PET prepolymer having an intrinsic viscosity of 0.08 to 0.5 dL/g is performed at a temperature higher than the glass transition temperature of the prepolymer by 140°C or higher. In this case, however, a sufficient solid-phase polycondensation reaction rate cannot always be obtained when the prepolymer has an average particle diameter of about 1 mm or more, and the temperature range is such that the particles do not fuse with each other. Further, Patent Document 3 discloses a solid-phase polycondensation method in which higher priority is placed on the progress of polymerization than on the progress of crystallization, that is, a method involving: bringing low-molecular-weight PET prepolymer particles into contact with a heat transfer medium to increase the temperature of the particles to the temperature range of about 205°C to 240°C within less than 10 minutes; and performing the solid-phase polycondensation of the particles in a stream of an inert gas. However, the disclosed method involves applying a thermal impact to increase the temperature to the temperature range of about 205°C to 240°C within an extremely short time period, so the particles are apt to fuse with each other. To prevent the fusion, special contrivance must be made on a facility in order that the PET prepolymer particles may not contact with each other. In addition, the method cannot provide an effect of shortening a time period needed for a solid-phase polycondensation reaction. Therefore, the method is not always satisfactory owing to reasons including the above reasons.

On the other hand, Patent Document 4 discloses, in relation to a method involving performing the solid-phase polycondensation of PET to increase the molecular weight of PET, a heat treatment step involving the use of two or more continuous moving beds in the solid-phase polycondensation step. However, the disclosed technique involves increasing the temperature gradually of the particles of a PET prepolymer having an intrinsic viscosity of about 0.5 to 0.65 dL/g and a moderate molecular weight in order that the particles may not fuse with each other upon solid-phase polycondensation of the particles, and disclosed technique does not always improve a polycondensation reaction rate.

In addition, a facility for melt polycondensation for obtaining the prepolymer having a moderate molecular weight is more expensive than a facility for obtaining a low-molecular-weight prepolymer, so the method is not always satisfactory from a comprehensive viewpoint.

In addition, Patent Document 5 discloses an apparatus for the continuous crystallization of a polyester material in which a jet eddy bed having mixing property and a fluidized bed having piston flow property are connected to each other. The main object of the document is to turn a polyester having a low crystallization rate such as a copolymerized polyester into granules having a uniform crystallinity and causing no agglomeration, and the document does not describe a solid-phase polymerization apparatus as a subsequent step.

In addition, Patent Document 6 discloses a continuous multistage heat treatment apparatus having a fluid path in a separation wall between multiple fluidized regions and characterized in that a first region occupies a large part of the total capacity of the apparatus. However, as in the case of Patent Document 5, Patent Document 6 does not describe a solid-phase polymerization apparatus as a subsequent step.

Patent Document 1: JP 3626758 B
Patent Document 2: JP 2004-67997 A
Patent Document 3: JP 2004-537622 A
Patent Document 4: US 5,408,035 B
Patent Document 5: JP 3073498 B
Patent Document 6: JP 2005-500298 A

WO 2004/058852 A1 discloses a process for solid phase continuous polymerization of polyethylene terephthalate (PET) in order to achieve an increase of the intrinsic viscosity of a low molecular weight PET pre-polymers flow.

Disclosure of the Invention

Problem to be solved by the Invention

An object of the present invention is to provide an industrially useful production method by which a polyethylene terephthalate having an additionally high molecular weight can be efficiently produced by: treating low-molecular-weight polyethylene terephthalate prepolymer particles with heat; and performing the solid-phase polycondensation of the particles at a high polycondensation reaction rate without causing the fusion of the particles.

Means for solving the Problems

The inventors of the present invention have conducted investigation on the above-mentioned problems. As a result, the inventors have found that a fluidized bed is useful as an apparatus for the crystallization of polyester particles, and a moving bed is effective for solid-phase polycondensation. In addition, the inventors have found that, prior to the solid-phase polycondensation of crystallized polyester particles at a high temperature, the preliminary solid-phase polycondensation of the particles is performed for a short time period at a temperature lower than the solid-phase polycondensation temperature, whereby a solid-phase polycondensation reaction rate at the high temperature increases, and a total reaction time can be shortened. As a result of further investigation, the inventors have found that an increase in temperature of the particles with a fluidized bed within a short time period after the above preliminary solid-phase polycondensation is effective. Thus, the inventors have reached a first reference embodiment of the present invention. That is, a gist of the first reference embodiment is as described below.

An apparatus for a heat treatment of polyester particles for performing continuous solid-phase polycondensation of the polyester particles including: (1) a first fluidized bed; (2) a first moving bed; (3) a second fluidized bed; and (4) a second moving bed in the stated order along a flow of the particles, characterized in that the second moving bed has a capacity twice or more as large as a capacity of the first moving bed.

Further, as a preferred embodiment of the first reference embodiment, exemplified are the following apparatuses.

The apparatus for a heat treatment of polyester particles, characterized in that the first fluidized bed includes a fluidized bed region having perfect mixing property and placed on an upstream side and a fluidized bed region having plug flow property and placed on a downstream side;

The apparatus for a heat treatment of polyester particles, characterized in that the second fluidized bed includes a fluidized bed having plug flow property;

The apparatus for a heat treatment of polyester particles, characterized in that the first moving bed and/or the second moving bed has a mechanism via which an inert gas is circulated, and a lower portion and an upper portion of the moving bed includes a gas inlet and a gas outlet, respectively;

The apparatus for a heat treatment of polyester particles, characterized in that the first moving bed and/or the second moving bed includes multiple regions partitioned in upward and downward directions, and a lower portion and an upper portion of each region include a gas inlet and a gas outlet, respectively;

The apparatus for a heat treatment of polyester particles, characterized in that the first moving bed and/or the second moving bed has multiple regions partitioned in upward and downward directions, and each region includes a gas inlet and a gas outlet in its transverse direction;

The apparatus for heat treatment of polyester particles, characterized in that a circulation path of the inert gas has a mechanism via which organicmatter and/or water in the gas is removed;

The apparatus for a heat treatment of polyester particles, characterized in that a circulation path of the inert gas has a mechanism via which organic matter and/or water in the gas is recovered by being condensed;

The apparatus for a heat treatment of polyester particles, characterized in that a circulation path of the inert gas has a mechanism via which organic matter in the gas is burnt and a mechanism via which water in the gas is absorbed in the stated order;

The apparatus for a heat treatment of polyester particles, characterized in that a circulation path of the inert gas has a mechanism via which organic matter and/orwater in the gas is recovered by being condensed, a mechanism via which organic matter in the gas is burnt, and a mechanism via which water in the gas is absorbed in the stated order;

Theapparatus for a heat treatment of polyester particles, characterized in that the first moving bed and/or the second moving bed has a mechanism via which an inert gas is circulated and multiple regions partitioned in upward and downward directions, at least a circulation path of the inert gas circulating in an uppermost region has a mechanism via which organic matter and/or water in the gas is recovered by being condensed, and at least a circulation path of the inert gas circulating in a lowermost region has a mechanism via which organic matter in the gas is burnt and a mechanism via which water in the gas is absorbed in the stated order; and

The apparatus for a heat treatment of polyester particles, characterized by further including a mechanism via which organic matter condensed and recovered from the inert gas is used as part of raw materials for producing the polyester particles.

In addition, another gist of the first reference embodiment is as follows. A multistage solid-phase polycondensation method for polyester particles includes performing solid-phase polycondensation of polyester particles having an intrinsic viscosity of 0.13 to 0.40 dL/g in the first moving bed of the heat treatment apparatus until the intrinsic viscosity increases by 0.03 to 0.10 dL/g, and performing additional solid-phase polycondensation of the polyester particles in the second moving bed of the apparatus until the intrinsic viscosity becomes equal to or larger than 0.70 dL/g; and

The multistage solid-phase polycondensation method for polyester particles, characterized by further including condensing and recovering part or entirety of organic matter as the by-product of the solid-phase polycondensation , and using the recovered organic matter as part of raw materials for producing the polyester particles.

Further, the inventors have found that, prior to solid-phase polycondensation at a high temperature, preliminary solid-phase polycondensation is performed at a temperature lower than the solid-phase polycondensation temperature by 15°C or more, whereby a solid-phase polycondensation reaction rate at the high temperature increases. Thus, the inventors have reached a second reference embodiment.

That is, a gist of the second reference embodiment is as described below.

A method of producing a polyester includes performing a heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester, characterized in that the heat treatment is divided into n stages, and the following conditions are satisfied:

(1) a temperature (Tj) in a j-th stage of the heat treatment is 190°C or higher and 230°C or lower, and a value for an increase in intrinsic viscosity in the j-th stage is 0.03 dL/g or more;

(2) at least one combination of the j-th stage and a k-th stage of the heat treatment in which the temperature (Tj (°C)) in the j-th stage and a temperature. (Tk (°C)) in the k-th stage satisfy the following (Eq. 1a) is present:

$$\text{(Eq. 1a)} \quad Tj + 15 \leq Tk \leq 245;$$

(3) difference between an intrinsic viscosity upon completion of the j-th stage and an intrinsic viscosity upon initiation of the k-th stage in the combination or the j-th stage and the k-th stage is 0.10 dL/g or less; and

(4) n represents an integer of 2 or more, and j and k represent integers satisfying $1 \leq j < k \leq n$.

In addition, another gist of the second reference embodiment is as described below.

A method of producing a polyester including performing a heat treatment of a polyester prepolymer having an intrinsic viscosity Of 0.18 dL/g or more and 0.40 dL/g or less in a solid state to increase the intrinsic viscosity of the polyester prepolymer by 0.50 dL/g or more to obtain the polyester, is characterized in that: the heat treatment includes all of a first stage of crystallizing the polyester prepolymer at a temperature T1a (°C), a second stage of performing solid-phase polycondensation of the crystallized polyester prepolymer at a temperature T2a (°C), a third stage of increasing a temperature of the product obtained in the second stage to a temperature T3a (°C), and a fourth stage of performing solid-phase polycondensation of the product obtained in the third stage at a temperature T4a (°C) in the stated order; a value for an increase in intrinsic viscosity in the second stage is 0.03 dL/g or more; a difference between an intrinsic viscosity upon completion of the second stage and an intrinsic viscosity upon initiation of the fourth stage is 0.10 dL/g or less; and the temperatures T1a, T2a, T3a, and T4a (°C) satisfy the following (Eq. 4a) to (Eq. 7a) :

$$\text{(Eq. 4a)} \quad 100 \leq T1a \leq 200;$$

$$\text{(Eq. 5a)} \quad 190 \leq T2a \leq 230;$$

$$\text{(Eq. 6a)} \quad T4a \leq T3a \leq 250;$$

and

$$\text{(Eq. 7a)} \quad T2a + 15 \leq T4a \leq 245.$$

In addition, as a result of detailed investigation on a relationship between a temperature and a polycondensation reaction rate in a solid-phase polycondensation step, the inventors have found that the solid-phase polycondensation step is performed in stages, and a former step in the step, that is, a first-stage solid-phase polycondensation step is performed at a temperature lower than the temperature of a latter step, that is, a second-stage solid-phase polycondensation step by 15°C or more, whereby a solid-phase polycondensation reaction rate throughout the entirety of the first and second-stage solid-phase polycondensation steps increases. Thus, the inventors have reached a third reference embodiment.

That is, a gist of the third reference embodiment resides in a method of producing a polyethylene terephthalate including performing a heat treatment of a polyethylene terephthalate prepolymer having an intrinsic viscosity of 0.18 dL/g or more and 0.40 dL/g or less in a solid state to provide a polyethylene terephthalate having an intrinsic viscosity of 0.70 dL/g or more, characterised in that the heat treatment includes (1) a first-stage solid-phase polycondensation step and (2) a second-stage solid-phase polycondensation step below in the stated order:

(1) first-stage solid-phase polycondensation step;
a step of treating the polyethylene terephthalate prepolymer with heat at a temperature (T1b) of 200°C or higher and 225°C or lower under an inert gas atmosphere or reduced pressure for an average residence time of 0.5 hour or more and 10 hours or less so that a value for an increase in intrinsic viscosity of the prepolymer is 0.03 dL/g or more; and
(2) second-stage solid-phase polycondensation step;
a step of treating the prepolymer after the first-stage solid-phase polycondensation step with heat at a temperature (T2b) of 215°C or higher and 240°C or lower under an inert gas atmosphere or reduced pressure for an average residence time of 2 hours or more,
provided that the temperatures T1b (°C) and T2b (°C) satisfy the following (Eq. 1b):

$$T1b + 15 \leq T2b \quad \text{(Eq. 1b)}.$$

Further, the inventors have conducted detailed investigation on conditions in solid-phase polycondensation. As a result, the inventors have found that, when a method of producing a high-molecular-weight polyethylene terephthalate includes a "first-stage solid-phase polycondensation step", a "temperature increase step", and a "second-stage solid-phase polycondensation step" in the stated order, and temperature increase conditions in the temperature increase step are caused to fall within specific ranges, a reaction rate in the second-stage solid-phase polycondensation step increases, and the high-molecular-weight polyethylene terephthalate can be produced within a shorter time period than that in the case of an ordinary method. Thus, the inventors have reached the present invention. That is, the gist of the present invention is as described below.

A method of producing a polyethylene terephthalate including performing a heat treatment or a polyethylene terephthalate prepolymer having an intrinsic viscosity of 0.18 dL/g or more and 0.40 dL/g or less in a solid state to provide an intrinsic viscosity of 0.70 dL/g or more is characterized in that the heat treatment in the solid state includes a first-stage solid-phase polycondensation step, a temperature increase step, and a second-stage solid-phase polycondensation step in the stated order, and the respective steps satisfy the following conditions (1) to (3) :

(1) the first-stage solid-phase polycondensation step includes a step of treating the polyethylene terephthalate prepolymer with heat under an inert gas atmosphere or reduced pressure, and a temperature (T1c) of the heat treatment is 190°C or higher and 225°C or lower;

(2) the temperature increase step includes a step of increasing a temperature of the polyethylene terephthalate prepolymer after the first-stage solid-phase polycondensation step under an inert gas atmosphere or reduced pressure from a temperature equal to or lower than the temperature (T1c) of the heat treatment of the first-stage solid-phase polycondensation step to a temperature (T2c), the temperature of the polyethylene terephthalate prepolymer is increased from the temperature T1c (°C) to (T1c + 15)°C within 30 minutes, and the temperatures T1c (°C) and T2c (°C) satisfy the following (Eq. 1c) and (Eq. 2c):

$$T1c+15 \leq T2c \quad (Eq. \ 1c),$$

and

$$205°C \leq T2c \leq 240°C \quad (Eq. \ 2c);$$

and

(3) the second-stage solid-phase polycondensation step includes a step of treating the polyethylene terephthalate prepolymer after the first-stage solid-phase polycondensation step and the temperature increase step with heat under an inert gas atmosphere or reduced pressure, and a temperature (T3c) of the heat treatment is 190°C or higher and 240°C or lower.

Effects of the Invention.

The apparatus of the first reference embodiment allows the solid-phase polycondensation of low-molecular-weight polyester prepolymer particles at a high speed without the fusion of the particles because the apparatus allows the temperature of the particles to be increased gradually. As a result, a melt polycondensation step can be relatively simplified, and the simplification leads to a reduction in cost for the entirety of a polyester production apparatus. The resultant high-molecular-weight polyester is applied in a wide variety of fields including fibers, textiles, molding resins, and beverage bottles.

According to the method of producing a polyester of the second reference embodiment, there can be provided a method of producing a polyester, the method including performing the solid-phase polycondensation of low-molecular-weight polyester prepolymer particles at a high speed without the fusion of the particles. The polyester obtained by the method can be used in a wide variety of applications including beverage bottles and industrial fibers.

According to the method of producing a polyethylene terephthalate of the third reference embodiment, there can be provided a method of producing a PET, the method including performing the solid-phase polycondensation of low-molecular-weight PET prepolymer particles at a high polycondensation reaction rate without the fusion of the particles. The PET obtained by the method has a high molecular weight, and can be used in a wide variety of applications including beverage bottles and industrial fibers. In addition, the method is economically advantageous to a large extent because a low-molecular-weight PET prepolymer can be utilized, so a burden on a facility in a melt polycondensation step can be reduced.

According to the method of producing a polyethylene terephthalate of the present invention, a high-molecutar-weight PET can be efficiently produced by performing the solid-phase polycondensation of low-molecular-weight PET prepolymer particles obtained by melt poly-condensation at a high polycondensation reaction rate without the fusion of the particles.

That is, the method of producing a PET of the present invention is a method of efficiently producing a desired high-molecular-weight PET suitable for various applications by treating PET prepolymer particles obtained by melt polycondensation with heat under an inert gas atmosphere or reduced pressure, that is, progressing the polycondensation of the particles each in a solid state (solid-phase polycondensation). Requirements at that time are as follows: a low-molecular-weight PET prepolymer is used, and the solid-phase polycondensation is performed under predetermined conditions. The performance of the solid-phase poly-condensation under conditions controlled to the predetermined conditions provides a larger polycondensation reaction rate in a high-molecular-weight region than that under conditions in a conventional method, that is, that in the case where the solid-phase polycondensation is performed in one stage at 190°C to 240°C. As a result, an improvement in productivity such as the shortening of a solid-phase polycondensation time or a reduction in quantity of heat needed for the polycondensation, and energy savings can be achieved.

Brief Description of the Drawings

Fig. 1 shows an example of a heat treatment apparatus of a first reference embodiment.
Fig. 2 shows another example of heat treatment apparatus of the first reference embodiment.
Figs. 3(1) and 3(2) are each an example showing the internal structure of a second moving bed D of the first reference embodiment.
Fig. 4 is an example of a block diagram showing circulation flow paths of an inert gas in the apparatus for the heat treatment or a polyester of the first reference embodiment.
Fig. 5 is another example of the block diagram showing circulation flow paths of the inert gas in the apparatus for the heat treatment of a polyester of the first reference embodiment.
Fig. 6 is an example of a reactor in which a fluidized bed having perfect mixing property and a fluidized bed having plug flow property are bonded to each other.
Fig. 7 is another example of a view showing an apparatus for treating an inert gas exhausted from a first moving bed and/or a second moving bed.
Fig. 8 is an example of a view showing an apparatus for treating an inert gas exhausted from a second moving bed by partitioning the gas in upward and downward directions.
Fig. 9 is a schematic view showing a heat treatment apparatus used in each of examples and comparative examples.
Fig. 10 is a schematic view showing a fusion test apparatus used in each of the examples and the comparative examples.

Description of Symbols

A: first fluidized bed
A1: fluidized bed region having perfect mixing property
a2: fluidized bed region having plug flow property
B: first moving bed
C: second fluidized bed
D: second moving bed
D1: first region of second moving bed
D2: second region of second moving bed
D3: third region of second moving bed
E: cooling machine
F: condensing device
G-G', G1-G1', G2-G2', G3-G3': inert gas flow path
H: heat exchanger

line 1: flow path of polyester prepolymer particle
line 2: flow path of crystallized polyester prepolymer particle

line 3: flow path of polyester particle after first-stage solid-phase polycondensation
line 4: flow path of polyester particle after first-stage solid-phase polycondensation with rapid temperature increase
line 5: flow path of polyester particle after second-stage solid-phase polycondensation
line 6: flow path of product
line 7: flow path of inert gas
line 8: flow path of exhausted gas
line 9: circulation flow path of inert gas
line 10: ejection flow path of condensed component

a1: horizontal porous plate
a2: inclined porous plate
b: stirring mechanism
c, d: partition plate

J: ethylene glycol scrubber
K: catalyst layer
L: desiccant layer
line 11: extract flow path of ethylene glycol scrubber
line 12: new supplying flow path of ethylene glycol
line 13: circulation flow path of ethylene glycol
line 14: purification flow path of ethylene glycol
line 15: recovery flow path of ethylene glycol scrubber inert gas
line 16: supplying flow path of air
line 17: flow path of inert gas after combustion treatment
line 18: flow path of purified inert gas

1: heat treatment tube
2: gas flow meter
3: nitrogen-introducing tube
4: nitrogen-preheating tube
5: oil bath
6: dispersion plate
7: sample layer
8: filter
9: gas purge port
10: branch
11: thermocouple
12: temperature gauge
21: heat treatment tube
22: gas flow meter
23: nitrogen-introducing tube
24: nitrogen-preheating tube
25: oil bath
26: dispersion plate
27: sample layer
28: filter
29: gas purge port
30: metal gauze
31: supporting column
32: pin
33: seat

Best Mode for carrying out the Invention

Hereinafter, the first reference embodiment will be described in detail. The first reference embodiment relates to an apparatus for the heat treatment of polyester particles for performing the continuous solid-phase polycondensation of the polyester particles, including: (1) a first fluidized bed; (2) a first moving bed; (3) a second fluidized bed; and (4) a second moving bed in the stated order along the flow of the particles, the apparatus being characterized in that the second moving bed has a capacity twice or more as large as the capacity of the first moving bed.

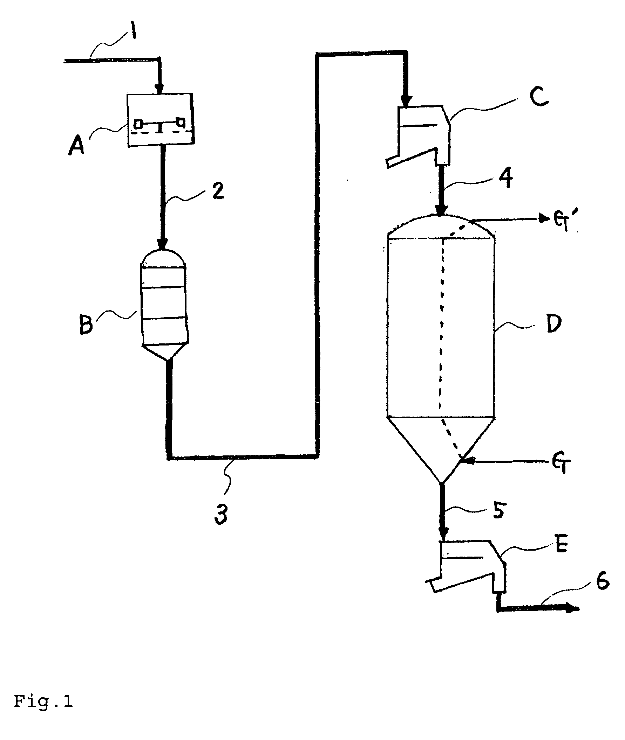

Fig. 1 shows an example of the heat treatment apparatus of the first reference embodiment. In the figure, reference symbol A represents the first fluidized bed, reference symbol B represents the first moving bed, reference symbol C represents the second fluidized bed, reference symbol D represents the second moving bed, reference symbol E represents a cooling machine, the line G-G' represents an inert gas flow path, and thick lines 1, 2, 3, 4, 5, and 6 each represent the flow of the polyester particles.

In Fig. 1, the polyester particles obtained by melt polycondensation are continuously introduced in a constant amount from an upstream step to the first fluidized bed A having perfect mixing property through the line 1. The temperature or the first fluidized bed A is kept at 100 to 200°C, or preferably 150 to 190°C, and, in the bed, the polyester particles are created with heat and crystallized for 2 to 30 minutes. The first fluidized bed A has a porous plate and, as required, a stirring mechanism, and, in the bed, fluidization under heat is performed with an inert gas introduced from the outside of the bed (not shown). Nitrogen is typically used as the inert gas, and the linear velocity of the gas for the fluidization is set to typically about 0.3 to 2 m/sec, or preferably about 0.5 to 1.5 m/sec, though the linear velocity, varies depending on the size of each of the polyester particles. The first fluidized bed A has a mechanism via which the particles can be continuously discharged in a constant amount such as an overflow gate or a rotary valve.

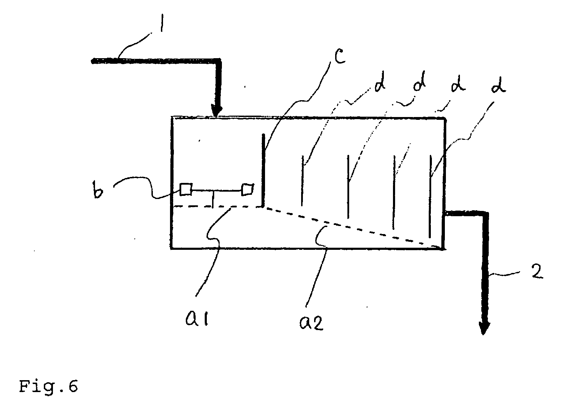

Reference symbol A of Fig. 1 represents one fluidized bed (one reactor) having perfect mixing property. Another example of reference symbol A is a reactor which is apparently one reactor but has two fluidized bed regions. Fig. 6 is an example of a reactor having a fluidized bed region having perfect mixing property and placed on an upstream side and a fluidized bed region having plug flow property and placed on a downstream side.

The phrase "having perfect mixing property" as used in the description comprehends not only the so-called "ideal perfectly mixed" state but also a state where particles placed in a reactor are quickly dispersed in the entirety of the inside of the reactor in a substantially uniform fashion; the phrase refers to a state where the vectorial sum of the travelling speeds of all particles in the reactor is substantially zero (each of the particles travels in a substantially random direction) . A fluidized bed having perfect mixing property can be typically formed by setting the linear velocity of a fluidization gas in a fluidized bed except a fluidized bed "having plug flow property" to be described later to a substantially large value. The structure of, and conditions for, the fluidized bed can be appropriately selected in accordance with, for example, the size of a reactor to be used and the physical properties of the polyester particles to such an extent that an effect of the first reference embodiment obtained.

In addition, the phrase "having plug flow property" as used in the description comprehends not only the so-called "ideal extrusion flow (also referred to as "piston flow")" state but also a state where the residence time of a particle in a reactor is substantially constant and a state where substantially no particles having a residence time of substantially zero seconds are present; the phrase refers to a state where the vectorial sum of the travelling speeds of all particles in the reactor is substantially parallel to a vector travelling from particle inlet to a particle outlet. A fluidized bed having plug flow property can be typically formed by, for example, providing a partition plate in a flow direction, inclining the flow direction downward, and/or setting the blowout direction or flow direction of a fluidization gas to a direction travelling from the particle inlet to the particle outlet in a fluidized bed. The structure of, and conditions for, the fluidized bed can be appropriately selected in accordance with, for example, the size of a reactor to be used and the physical properties of the polyester particles to such an extent that the effect of the first reference embodiment is obtained.

In Fig. 6, reference symbol al represents a horizontal porous plate, reference symbol a2 represents an inclined porous plate, reference symbol b represents a stirring mechanism, and reference symbols c and d each represent a partition plate. A former stage (left reaction chamber partitioned with the partition plate c) forms a fluidized bed region having perfect mixing property, and a latter stage (right reaction chamber) forms a fluidized bed region having plug flow property. Such fluidized bed reactor is effective in avoiding the fusion of the polyester particles.

The polyester particles discharged from the first fluidized bed A are continuously introduced in a constant amount to the first moving bed B through the line 2. The temperature of the first moving bed B is kept at 190 to 230°C, or preferably 200 to 215°C, and, in the bed, the polyester particles are treated with heat for 1.5 to 5 hours, whereby first-stage solid-phase polycondensation is performed. The polyester particles supplied to the first moving bed B have an intrinsic viscosity of preferably 0.18 to 0.40 dL/g, and are treated so that the intrinsic viscosity of the polyester particles increases by at least 0.03 dL/g, or preferably about 0.05 to 0.10 dL/g as a result of the solid-phase polycondensation. The first moving bed B has, at its lower portion, a mechanism via which the particles are continuously discharged in a constant amount, such as a rotary valve, and the polyester particles travel from above the bed to below the bed. Meanwhile, the inert gas travels from below the bed to above the bed (counter flow) , from above the bed to below the bed (parallel flow), or across the bed (horizontal direction); the bed preferably has a gas inlet at its lower portion and a gas outlet at its upper portion. Organic matter including mainly glycols, and water as by-products of the solid-phase polycondensation are discharged to an outside (G') of the first moving bed B in association with the inert gas introduced from an outside G (in Fig. 1, neither G nor G' is shown in the first moving bed B).

The polyester particles discharged from the first moving bed B are continuously introduced in a constant amount to the second fluidized bed C through the line 3. The second fluidized bed C is preferably a fluidized bed having: a function of rapidly increasing the temperature of the polyester particles obtained by the first-stage solid-phase poly-condensation; and plug flow property. The second fluidized bed C has a porous plate and, as required, a stirring mechanism, and, in the bed, the polyester particles are each maintained in a fluid state by an inert gas introduced from the outside of the bed (not shown). During the maintenance, the temperature of the polyester particles is increased to 230 to 245°C. The temperature is higher than the temperature of the first-stage solid-phase polycondensation by 15°C or more, and is controlled so as to be equal to or higher than the temperature of second-stage solid-phase polycondensation to be described later by 1 to 8°C, or preferably 3 to 6°C. This is because the frequency at which the polyester particles fuse with each other in the second moving bed can be reduced. The residence time of the second fluidized bed C is controlled to typically 30 minutes or less, preferably 25 minutes or less, or more preferably 20 minutes or less. A rapid increase in temperature of the polyester particles within such residence time reinforces the effect of the multistage solid-phase polycondensation of the first preferred embodiment. As in the case of the first fluidized bed A, the second fluidized bed C has a mechanism via which the particles can be continuously discharged in a constant amount, such as an overflow gate or a rotary valve.

The polyester particles discharged from the second fluidized bed C are continuously introduced in a constant amount to the second moving bed D through the line 4 where the second-stage solid-phase polycondensation is performed. The second-stage solid-phase polycondensation is preferably performed at a temperature which: is higher than the temperature of the first-stage solid-phase polycondensation by 15°C or more; and is equal to or lower than 25C°C. The capacity of the second moving bed D is set to be twice or more, or preferably three to eight times, as large as that of the first moving bed B in order that a reaction space needed for providing the polyester particles with a sufficient residence time may be secured. The residence time of the polyester particles in the second moving bed D is selected from the range of typically 5 to 50 hours, or preferably 8 to 20 hours, thought the time varies depending on the temperature of the bed. The second moving bed D has the same mechanism as that of the first moving bed B, and the polyester particles travel from above the bed to below the bed. The polyester particles are treated with heat for a predetermined residence time to undergo solid-phase polycondensation, and, as a result, the particles have an intrinsic viscosity of 0.70 dL/g or more, or preferably 0.80 dL/g or more. In addition, organic matter including mainly glycols, and water as by-products of the solid-phase polycondensation are discharged from G' to the outside of the second moving bed D in association with the inert gas introduced from G (counter flow contact). In some cases, the polymer particles can be discharged from G by introducing the inert gas from G' and bringing the gas into parallel flow contact with the particles; the bed preferably has a gas inlet at its lower portion and a gas outlet at its upper portion. The following procedure is preferably adopted: the inert gases exhausted from the first moving bed B and the second moving bed D are each independently, or merged with each other so as to be, introduced to a gas treatment step so that organic matter and/or water in the gases is recovered by being condensed. The inert gases from each of which the organic matter and/or water has been recovered by being condensed can be reused by being circulated in a system. As in the case of the first moving bed B, the second moving bed D has, at its lower portion, a mechanism via which the particles are continuously discharged in a constant amount, such as a rotary valve, and the polyester particles travel from above the bed to below the bed.

The polyester particles discharged from the second moving bed D are introduced to the cooling machine E through the line 5. Cooling is needed for, for example, stabilising the quality of each of the polyester particles (products) subjected to the solid-phase polycondensation. The structure of the cooling machine E is not limited, for example, but a fluidized bed having plug flow property is used, and the particles are each preferably cooled to around room temperature within a residency time of about 10 to 30 minutes. The cooled polyester particles are conveyed to a commercialisation step (not shown) through the line 6.

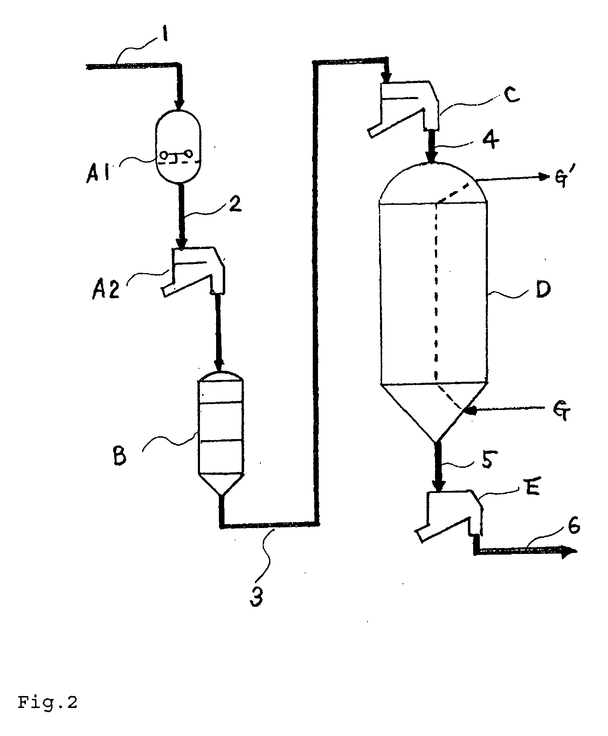

Fig. 2 shows another example of the heat treatment apparatus of the first reference embodiment. In the figure, reference symbol A1 represents a fluidized bed region having perfect mixing property; A2, a fluidized bed region having plug flow property; B, the first moving bed; C, the second fluidized bed; D, the second moving bed; and E, the cooling machine.

In Fig. 2, reference symbol A1 represents a fluidized bed placed on an upstream side along the flow of the polyester particles, and reference symbol A2 represents a fluidized bed placed on a downstream side. Connecting A1 and A2 as described above results in the formation of the first moving bed A. A1 has a structure which is composed of, for example, a porous plate, a stirring mechanism, and a partition plate and in which fluidization under heat is performed with an inert gas introduced from the outside of the structure (not shown). A2 is preferably of a structure having plug flow property. An inert gas is typically introduced to A2. Appropriately selecting the flow direction of each gas can aid the movement of each of the polyester particles. In addition, inclining the flow direction downward can also aid the movement of each of the polymer particles.

The crystallization of polyester particles obtained by melt polycondensation in such two-stage steps (A1 + A2) has, for example, the following advantage: particles insufficiently crystallized owing to a short residence time in A1 can be sufficiently crystallized in A2. The placement of a moving bed or a fluidized bed having plug flow property in an initial stage upon crystallization of the polyester particles is disadvantageous because amorphous particles are unevenly distributed in the device, with the result that the polyester particles are apt to fuse with each other. A perfect mixing type fluidized bed is preferably provided in the initial stage.

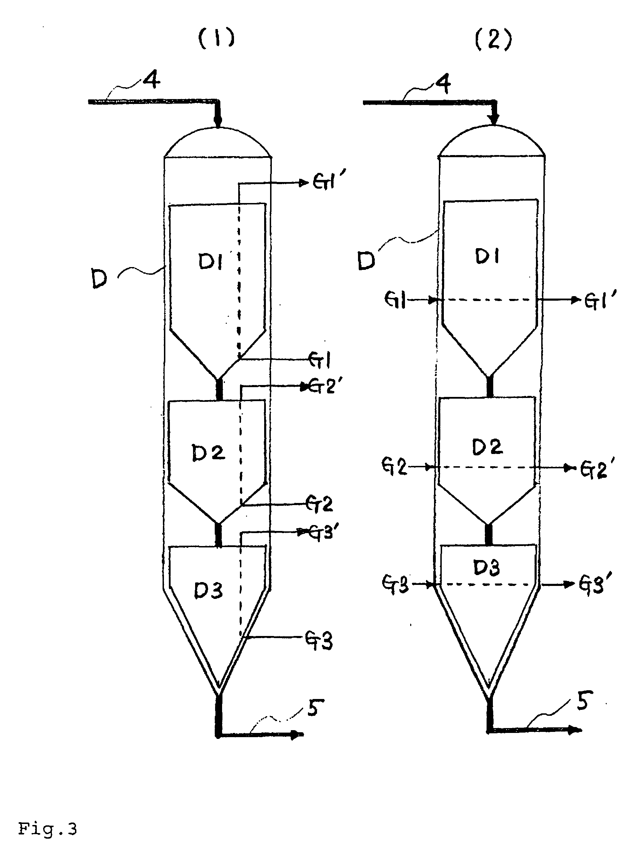

Figs. 3(1) and 3(2) are each an example showing the internal structure of the second moving bed D of the first reference embodiment. In the figures, reference symbol D1 represents a first region of the second moving bed; D2, a second region of the second moving bed; D3, a third region of the second moving bed; and G1-G1', G2-G2', and G3-G3', the circulation flow paths of an inert gas to the regions D1, D2, and D3, respectively. Fig. 3(1) shows a mode according to which the polyester particles and the inert gas are brought into counter flow contact with each other, and Fig. 3(2) shows a mode according to which the polyester particles and the inert gas contact with each other so as to be perpendicular to each other.

In each of Figs. 3(1) and 3(2), the second moving bed D has such a structure that the bed is vertically partitioned into three regions and the respective partitions are each independently provided with a circulation flow path for introducing and exhausting the inert gas. The polymer particles reside in the second moving bed D for a long time period, whereby large amounts of glycols and water are produced as by-products. The amounts of the by-products are not uniform in the vertical direction of the second moving bed D, and the amount of a glycol as a by-product typically increases with increasing height from the bottom of the bed. Therefore, providing the second moving bed D with a structure shown in each of Figs. 3(1) and 3(2) has the following advantage: the amount of the inert gas to be introduced can be independently controlled in each region, and, at the same time, inert gases different from each other in concentration of a glycol as a by-product can be each independently recovered. In some cases, the temperature of each partition as a region can be independently controlled.

In each of Figs. 3(1) and 3(2), the moving bed is vertically partitioned into three regions; the number of partitions is not limited, and the bed can be partitioned into two to six regions as required. The respective regions may be identical to or different from each other in size. The inert gas flow paths of the respective regions may be independent of each other, or some of the flow paths may be merged with each other. It should be noted that the first moving bed E can also be partitioned into multiple regions as in the case of the second moving bed D.

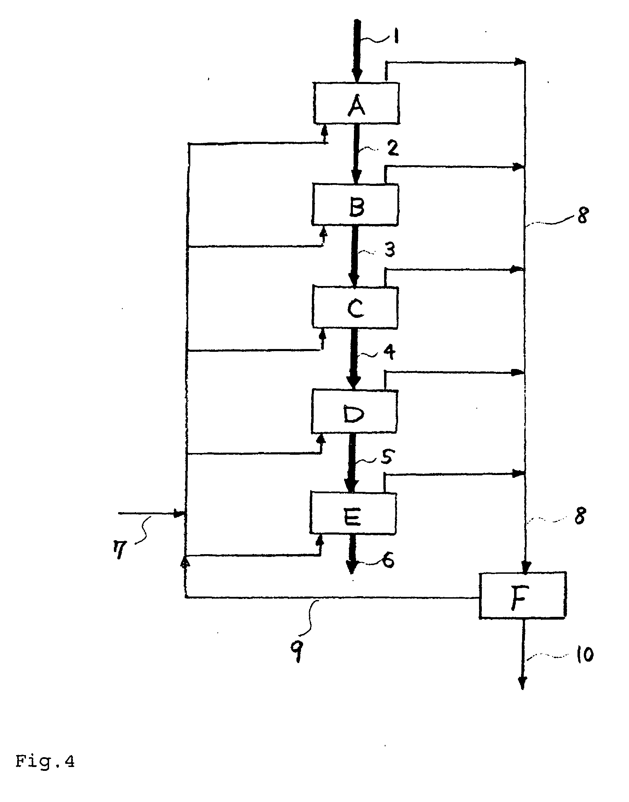

Fig. 4 is an example of a block diagram showing flow paths when an inert gas circulates in the apparatus for the heat treatment of a polyesters of the first reference embodiment. In the figure, reference symbols A, B, C, D, and E, and lines 1, 2, 3, 4, 5, and 6 each have the same meaning as that of Fig. 1. Inert gases exhausted from the first fluidized bed A, the first moving bed B, the second fluidized bed C, and the second moving bed D are merged with one another to be introduced through a line 8 to a mechanism via which organic matter and/or water is recovered, or preferably a condensing device F as a mechanism via which the recovery is performed by being condensed. The following circulation flow paths are formed: components to be condensed mainly composed of a glycol and water are introduced to a glycol recovery step through a line 10, and an uncondensed inert gas is supplied to each device again through a line 9. An inert gas is newly supplied from a line 7, and part of a circulating gas is exhausted to the outside of the apparatus (not shown). It should be noted that Fig. 4 shows the entirety of the circulation flow paths of an inert gas, and valves for opening and closing the flow paths are not shown in the figure. Therefore, the figure does not necessarily mean that the inert gas circulates in all of the flow paths.

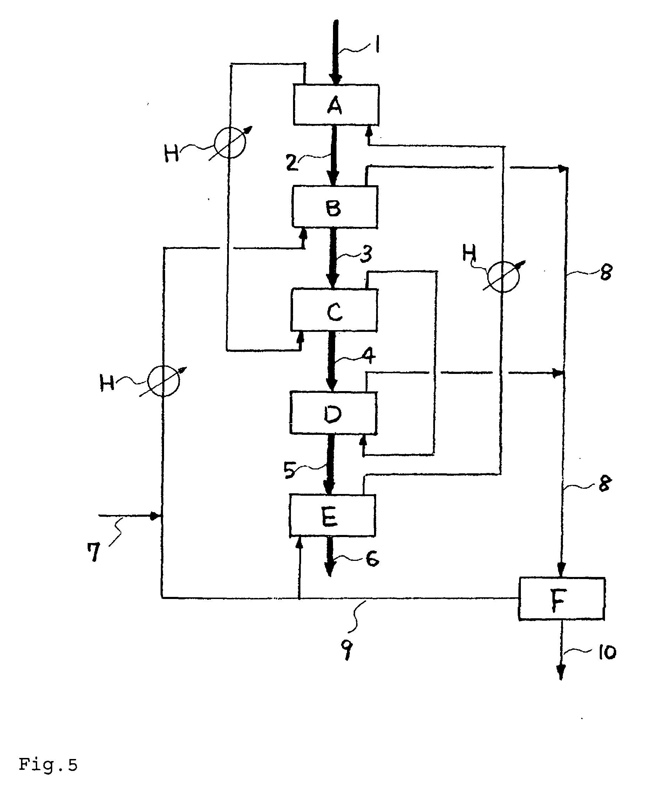

Fig. 5 is another example of the block diagram showing the flow paths in each of which an inert gas circulates in the apparatus for the heat treatment of a polyester of the first reference embodiment. In the figure, reference symbol H represents a heat exchanger. The example is an example of a design for optimizing a heat balance, the design taking the temperature and heat capacity of an inert gas to be exhausted from each step into consideration.

Fig. 6 is an example of a reactor having a fluidized bed region having perfect mixing property and placed on an upstream side and a fluidized bed region having plug flow property and placed on a downstream side.

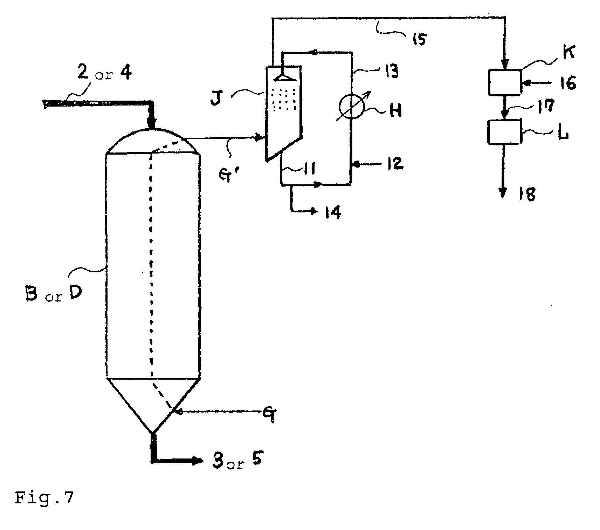

Fig. 7 is another example of a view showing an apparatus for treating an inert gas exhausted from the first moving bed and/or the second moving bed. In the figure, reference symbol J represents an ethylene glycol scrubber; K, a catalyst layer; and L, a desiccant layer. An inert gas exhausted from a gas exhaust flow path G' is brought into counter flow contact with cold ethylene glycol dropped from the upper portion of the scrubber J, and organic matter and/or water in the gas is condensed. Ethylene glycol containing a condensate is extracted from the scrubber J through a line 11. Part of extracted ethylene glycol is introduced to a purification step through a line 14, and the residue is circulated. Ethylene glycol is newly supplied from a line 12, cooled by the heat exchanger H together with circulating ethylene glycol, and supplied to the upper portion of the scrubber J through a line 13. The inert gas from which components to be condensed have been removed is introduced to the catalyst layer K through a line 15, and is subjected to a combustion treatment with air supplied from a line 16. The inert gas after the combustion treatment passes through the desiccant layer L where water is removed from the gas, and the remainder passes through a line 18, whereby a purified inert gas is obtained. The purified inert gas is recycled in an inert gas introduction flow path G. According to the apparatus shown in Fig. 7, a component to be condensed (the organic matter and/or water) is removed more efficiently than that in the case of an apparatus shown in each of Figs. 4 and 5, whereby the exhausted inert gas can be recycled as an inert gas having an additionally high purity.

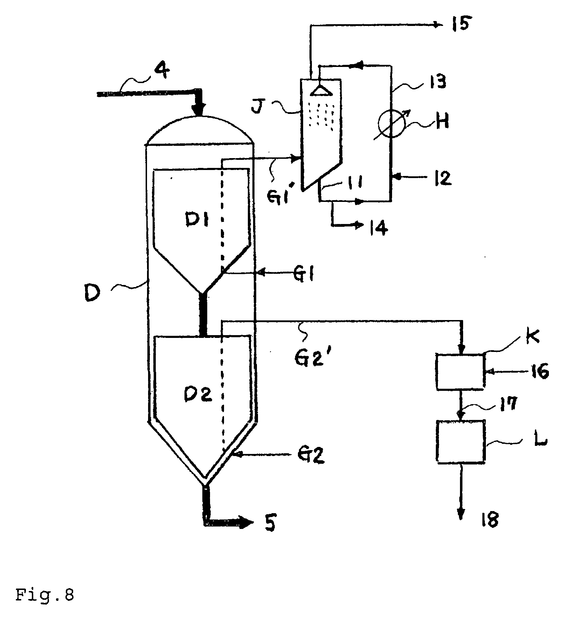

Fig. 8 is an example of a view showing an apparatus for treating an inert gas exhausted from the second moving bed by partitioning the gas in upward and downward directions. As shown in Fig. 8, the second moving bed D is partitioned into two regions: an upper region and a lower region. An inert gas exhausted from an upper region D1 is treated by the ethylene glycol scrubber J. Because the amount of ethylene glycol to be produced as a by-product is large, emphasis should be placed on the recovery of the by-product, and the treatment is in consonance with the object. On the other hand, an inert gas exhausted from a lower region D2 of the second moving bed D is treated by the catalyst layer K and the desiccant layer L. The device arrangement is suitable for recycling an inert gas having a high purity. It should be noted that the first moving bed B can also be partitioned into two regions, that is, an upper region B1 and a lower region B2, though the regions are not shown. In this case, the amount of ethylene glycol to be produced as a by-product is large in each region, so a treatment with the ethylene glycol scrubber J is preferable.

In addition, the organic matter condensed and recovered from the inert gas as described above can be preferably used as part of raw materials for producing the polyester particles because the organic matter is mainly composed of the diol used upon production of the polyester particles. Therefore, the heat treatment apparatus of the first reference embodiment preferably has a mechanism via which organic matter condensed and recovered from the inert gas is used as part of raw materials for producing the polyester particles. A method of using the recovered organic matter as part of raw materials is not particularly limited; for example, the organic matter is desirably used as part of raw materials for preparing raw material slurry in a method of producing a polyester Prepolymer to be described later. The use of the recovered organic matter as part of raw materials for producing polyester particles is more preferable because specific productivity upon production of a polyester to be obtained by the solid-phase polycondensation method of the first reference embodiment improves.

(1) The first fluidized bed, (2) the first moving bed, (3) the second fluidized bed, and (4) the second moving bed, and accessory facilities such as a mechanism via which a fluidized bed is divided, the cooling machine, the condensing device, the circulation flow paths of an inert gas, and the design for optimizing a heat balance in the apparatus for the heat treatment of polyester particles of the first reference embodiment have been described above. Next, polyester particles to be applied to the apparatus, the heat treatment of the polyester particles including solid-phase polycondensation, and the like will be described. Hereinafter, in particular, polyester particles obtained by melt polycondensation are referred to as "polyester prepolymer particles.".

The first reference embodiment is characterized by efficiently producing a polyester suitable for molding by: treating polyester prepolymer particles obtained by melt polycondensation with heat under an inert gas atmosphere or reduced pressure; and progressing the polycondensation of the particles each in a solid state (solid-phase polycondensation), and is characterized in that, at the time of the production, a low-molecular-weight prepolymer is used, solid-phase polycondensation is performed once at a relatively low temperature, and then the temperature is increased by 15°C or higher and solid-phase polycondensation is performed at a relatively high temperature until a polyester having a predetermined molecular weight is obtained. Such method provides a larger polycondensation reaction rate in a high-molecular-weight region than that in the case where the solid-phase polycondensation is initiated at a relatively high temperature . The reason for the foregoing is unclear, but the reason is assumed to be as described below.

That is, when the particles are crystallized at low molecular weight, a crystal structure is formed, whereby the mobility of a polyester molecular chain reduces, and part of terminal groups are inactivated. In particular, when the particles are crystallized at a low molecular weight, the absolute value for the number of terminal group to be inactivated increases, so a polycondensation reaction rate reduces in the latter half of the solid-phase polycondensation. In contrast, when the particles are treated with heat during the crystallization so that the temperature of the particles is increased by 15°C or higher, the particles each maintain a solid state, but the melting and recrystallization of the crystal occur, and an amorphous region where a large number of terminal groups are present is formed again, whereby part of inactivated terminals groups recover their activity, and the polycondensation reaction rate increases.

The heat treatment in the first reference embodiment means a step including a drying step, a temperature increase step, a crystallization step, and a solid-phase polycondensation step and intended for the treatment of a polyester prepolymer in a solid state under a temperature condition exceeding normal temperature. In addition, in the first reference embodiment, an intrinsic viscosity is used as an indicator for the molecular weight of a polyester.

<Polyester prepolymer>

A method of producing the polyester prepolymer to be used in the first reference embodiment is not particularly limited, and the prepolymer has only to be produced by a conventional production method for a polyester in ordinary cases. To be specific, the polyester prepolymer is typically produced by: subjecting a dicarboxylic acid and/or an ester formable derivative of the dicarboxylic acid, and a diol to an esterification reaction and/or an ester exchange reaction; and subjecting the resultant to melt poly-condensation using a polycondensation catalyst. Details about the foregoing are as described below. For example, the polyester prepolymer is obtained by: loading a dicarboxylic acid and a diol into a slurry preparation tank; stirring and mixing the components to prepare raw material slurry; subjecting the slurry to an esterification reaction in an esterification reaction tank under normal pressure to increased pressure while removing, for example, water produced by the reaction by distillation under heat; transferring the resultant polyester low-molecular-weight body (oligomer) as an esterification reaction product to a polycondensation tank; and subjecting the oligomer to melt polycondensation using a polycondensation catalyst under reduced pressure and heat.

A polycondensation reaction catalyst for the polyester prepolymer is not particularly limited, and a known catalyst can be used. Examples of the catalyst include: germanium compounds such as germanium dioxide, germanium tetroxide, germanium hydroxide, germanium oxalate, germanium tetraethoxide, and germanium tetra-n-butoxide; antimony compounds such as antimony trioxide, antimony pentoxide, antimony acetate, and methoxyantimony; and titanium compounds such as tetra-n-propyl titanate, tetra-i-propyl titanate, tetra-n-butyl titanate, titanium oxalate, and potassium titanium oxalate. One kind of them is used alone, or two or more kinds of them are used in combination. Of those, a titanium compound is preferably used because of its high polycondensation reaction activity. The catalyst is typically used in an amount of 1 to 400 massppm with respect to a polyester prepolymer to be obtained.

In addition, a phosphorus compound such as orthophosphoric acid, an alkyl orthophosphate, ethyl acid phosphate, triethylene glycol acid phosphate, phosphorous acid, or an alkyl phosphite can be used as a stabilizer. The stabilizer is used in an amount of preferably 1 to 1, 000 massppm, or particularly preferably 2 to 200 massppm with respect to the polyester prepolymer to be obtained.

Further, a compound of an alkali metal or of an alkaline earth metal such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol.

It should be noted that those operations are performed by one or more of a continuous method, a batch method, and a semi-batch method, and each of the esterification reaction tank (or an ester exchange reaction tank) and a melt polycondensation reaction tank may be composed of one stage or multiple stages.

A step of producing a polyester prepolymer to which the first reference embodiment is particularly preferably applicable is, for example, a step of producing a polyethylene terephthalate and/or a polybutylene terephthalate, that is, a production step in which the dicarboxylic acid is mainly composed of terephthalic acid and/or dimethyl terephthalate, and the diol is mainly composed of ethylene glycol and/or 1,4 -butanediol. The phrase "mainly composed" as used herein refers to a state where terephthalic acid accounts for 85 mol% or more, preferably 90 mol% or more, or more preferably 95 mol% or more of all dicarboxylic acid components, and ethylene glycol and/or 1,4-butanediol accounts for 85 mol% or more, preferably 90 mol% or more, or more preferably 95 mol% or more of all diol components.

Examples of the dicarboxylic acid component other than terephthalic acid include: aromatic dicarboxylic acids such as phthalic acid, isophthalic acid, dibromoisophthalic acid, sulfoisophthalic acid, phenylenedioxy dicarboxylic acid, 4,4'-diphenyl dicarboxylic acid, 4,4'-diphenylether dicarboxylic acid, 4,4'-diphenylketone dicarboxylic acid, 4,4'-diphenoxyethane dicarboxylic acid, 4,4'-diphenylsuifone dicarboxylic acid, and 2,6-naphthalene dicarboxylic acid; alicyclic dicarboxylic acids such as hexahydroterephtalic acid and hexahydroisophthalic acid; and aliphatic dicarboxylic acids such as succinic acid, glutaric acid, adipic acid, pimelic acid, suberic acid, azelaic acid, sebacic acid, undecadicarboxylic acid, and dodecadicarboxylic acid, and ester formable derivatives thereof.

Further examples of the diol component other than ethyleneglycol and 1,4-butanediol include, in addition to diethyleneglycol: aliphatic diols such as trimethyleneglycol, pentamethyleneglycol, hexamethyleneglycol, octamethyleneglycol, decamethyleneglycol, neopentylglycol, 2-ethyl-2-butyl-1, 3-propanediol, polyethyleneglycol, and polytetramethylene etherglycol; alicyclic diols such as 1,2-cyclohexanediol, 1,4-cyclohexanediol, 1,1-cyclohexanedimethylol, 1,4-cyclohexanedimethylol, and 2,5-norbornanedimethylol; aromatic diols such as xyleneglycol, 4,4'-dihydroxybiphenyl, 2,2-bis(4'-hydroxyphenyl)propane, 2,2-bis(4'-$\beta$-hydroxyethoxyphenyl)propane, bis(4-hydroxyphenyl)sulfone, and bis(4-$\beta$-hydroxyethoxyphenyl)sulfone; and an ethyleneoxide adduct of or propyleneoxide adduct of 2,2-bis(4' -hydroxyphenyl) propane.

The polyester prepolymer obtained by the melt polycondensation reaction is supplied to a die head connected to the melt polycondensation reaction tank through a pipe and/or a gear pump and/or a filter, and is ejected from multiple die holes provided for the tip of a die in a strand shape or a drop shape. The ejected polyester prepolymer is granulated with, for example, a strand cutter.

The polyester prepolymer particles to be used in the first reference embodiment have an average particle diameter or preferably 0.5 to 3.0 mm, more preferably 0.6 mm or more, or particularly preferably 0.65 mm or more in ordinary cases. Meanwhile, the average particle diameter is more preferably 2. 0 mm or less, still more preferably 1.8 mm or less, or particularly preferably 1.6 mm or less. When the average particles diameter is less than 0.5 mm, the amount of a fine powder increases upon granulation of the prepolymer, so a trouble is apt to occur in any subsequent step during the transfer of the particles. When the average particle diameter exceeds 3 mm, a needed solid-phase polycondensation time tends to be extremely long irrespective of the presence or absence of the effect of the first reference embodiment.

Here, the average particle diameter of the particles is determined as follows: a cumulative distribution curve is created by a dry sieving test method described in JIS K0069, and the value at which a cumulative percentage reaches 50% is defined as the average particle diameter.

The polyester prepolymer to be used in the first reference embodiment has an intrinsic viscosity of 0.18 to 0.40 dL/g. A lower limit for the intrinsic viscosity is preferably 0.20 dL/g. An upper limit for the intrinsic viscosity is preferably 0.38 dL/g, or particularly preferably 0.35 dL/g. An intrinsic viscosity of less than the lower limit is not preferable because a fine powder is apt to be produced upon granulation of the prepolymer, and a needed solid-phase polycondensation time becomes extremely long even in the case where the effect of the first reference embodiment is taken into consi deration. When the intrinsic viscosity exceeds the upper limit, an expensive facility is needed for stirring a highly viscous liquid and for subjecting the liquid to a high-vacuum reaction in a melt polycondensation step, with the result that the effect of the first reference embodiment is reduced.

The polyester prepolymer of the first reference embodiment has a terminal carboxyl group concentration of preferably 100 equivalents/ton or less, more preferably 70 equivalents/ton or less, still more preferably 40 equivalents/ton or less, or particularly preferably 20 equivalents/ton or less. When the terminal carboxyl group concentration exceeds 100 equivalents/ton, a polycondensation reaction rate tends to be small in a solid-phase polycondensation step as a subsequent step.

<Heat treatment>

The polyester prepolymer particles obtained as described above are treated in a solid state with heat, and are subjected to solid-phase polycondensation so as to have a predetermined intrinsic viscosity by the method of the first reference embodiment. The heat treatment in the first reference embodiment is divided into multiple steps such as crystallization, first-stage solid-phase polycondensation, temperature increase, and second-stage solid-phase poly- condensation. The first reference embodiment is an apparatus suitable for continuously performing the above heat treatment. The polyester to be obtained by the first reference embodiment has an intrinsic viscosity of preferably 0.70 dL/g or more, or particularly preferably 0.80 dL/g or more. When the intrinsic viscosity is less than 0.70 dL/g, an effect or the first reference embodiment in increasing a solid-phase polycondensation reaction rate does not lead to an improvement in productivity.

The solid-phase polycondensation steps of the heat treatment of the first reference embodiment are performed in at least two moving bed. The solid-phase polycondensation temperature of the first stage is 190 to 230°C. A lower limit for the temperature is preferably 195°C, or more preferably 205°C. An upper limit for the temperature is preferably 220°C, or more preferably 215°C. In the case where the temperature is lower than 190°c, a solid-phase polycondensation reaction rate in the first stage becomes small, and a load in the second-stage solid-phase polycondensation as a subsequent step becomes large. The case where the temperature exceeds 230°C is inconvenient because the temperature exceeds the temperature of the second stage, that is, 250°C, and, for example, the fusion of the polyester particles is apt to occur. In addition, as described above, the solid-phase polycondensation temperature of the second-stage is set to be higher than the solid-phase polycondensation temperature of the first stage by 15°C or more and to be equal to or lower than 250°C. When the difference is lower than 15°C, an effect of improving a solid-phase polycondensation reaction rate of the first reference embodiment cannot be obtained.

An increase in intrinsic viscosity in the first stage is 0.03 dL/g or more, or preferably 0.05 dL/g or more. When the increase is less than 0.03 dL/g, an effect of improving a solid-phase polycondensation reaction rate in the second stage cannot be sufficiently obtained. An upper limit for the increase in intrinsic viscosity in the first stage has Only to be set in order that a time period for the entirety of the heat treatment may be shortest and/or a quantity of heat to be inputted may be minimum, and is typically about 0.30 dL/g, or preferably 0.10 dL/g.

Inaddition, a difference in intrinsic viscosity between the polyester at the outlet of the first-stage solid-phase polycondensation (the first moving bed B) and the polyester at the inlet of the second-stage solid-phase polycondensation (the second moving bed D) is preferably 0.10 dL/g or less, or more preferably 0.05 dL/g or less in ordinary cases. A difference in intrinsic viscosity in the range is more preferable because the effect of the first reference embodiment obtained by increasing the solid-phase polycondensation temperature of the first stage to the solid-phase polycondensation temperature of the second stage within a short time period can be sufficiently exerted.

A temperature increase step composed of the second fluidized bed C is provided between the first-stage solid- phase polycondensation and the second-stage solid-phase polycondensation in order that transfer from the first stage to the second stage may be smoothly performed. The temperature of the temperature increase step is preferably 250C or lower because the fusion of the polymer particles hardly occurs in the second-stage solid-phase polycondensation.

In the method of the first reference embodiment, a step of crystallizing the polyester prepolymer substantially in an amorphous state is performed in the first fluidized bed prior to the first-stage solid-phase polycondensation step. The crystallization can alleviate the fusion of the polyester particles in a subsequent solid-phase polycondensation step. The temperature of the first fluidized bed is 100 to 200°C, or preferably 150 to 190°C. When the temperature is lower than 100°C, it requires a long time to crystallize the prepolymer particles to such an extent that the particles do not fuse with each other, so the effect of the first reference embodiment is reduced. When the temperature exceeds 200°C, the fusion of the prepolymer particles tends to occur.

The polyester to be obtained by the method of the first reference embodiment can be suitably used as a raw material to be molded into, for example, a fiber, a film, or a bottle. In particular, the polyester can be turned into a bottle to be used for, for example, packaging a beverage by: molding the polyester into a preform by injection molding or extrusion molding; and subjecting the preform to stretch blow molding. In addition, the polyester can be turned into a bottle by direct blow molding.

In addition, the polyester can be turned into a film or a sheet by extrusion molding or stretch molding to be used in various applications including packaging materials. In addition, the polyester can be turned into a fiber by extrusion/stretch molding.

The heat treatment apparatus of the first reference embodiment can be used as an apparatus for performing the method of the second, third reference embodiments or the present invention.

The method of producing a polyester of the second reference embodiment (which may hereinafter be referred to as "production method of the second reference embodiment") relates to a method of efficiently producing a polyester suitable for molding by: treating a polyester prepolymer obtained by melt polycondensation in a solid state with heat under an inert gas atmosphere or reduced pressure; and progressing the polycondensation (solid-phase polycondensation) of the prepolymer, and is characterized in that, at the time of the production, a low-molecular-weight prepolymer is used, solid-phase polycondensation is performed once at a relatively low temperature, and then the temperature is increased by 15°C or higher and solid-phase polycondensation is performed at a relatively high temperature until a polyester having a predetermined molecular weight is obtained. Such method provides a larger polycondensation reaction rate in a high-molecular-weight region than that in the case where the solid-phase polycondensation is initiated at a relatively high temperature. The reason for the foregoing is unclear, but the reason is assumed to be as described below. That is, when the prepolymer is crystallized at a low molecular weight, a crystal structure is formed, whereby the mobility of a polyester molecular chain reduces, and part of terminal groups are inactivated. In particular, when the prepolymer is crystallized at a low molecular weight, the absolute value for the number of terminal groups to be inactivated increases, so a polycondensation reaction rate reduces in the latter half of the solid-phase polycondensation. In contrast, when the prepolymer is treated with heat during the crystallization so that its temperature is increased by 15°C or higher, the prepolymer maintains a solid state, but the melting and recrystallization of the crystal occur, and an amorphous region where a large number of terminal groups are present is formed again, whereby part of inactivated terminal groups recovery their activity, and the polycondensation reaction rate increases.

The production method of the second reference embodiment is a method of producing a polyester, and including performing the heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester, and the method being characterized in that the heat treatment is divided into n stages, and specific conditions are satisfied.

The heat treatment in the production method of the second reference embodiment means a step including drying step, a temperature increase step, a crystallization step, and a solid-phase polycondensation step and intended for the treatment of a polyester prepolymer in a solid state under a temperature condition exceeding normal temperature.

In addition, in the production method of the second reference embodiment, an intrinsic viscosity is used as an indicator for the molecular weight of a polyester.

Hereinafter, details about the second reference embodiment will be described.

The polyester prepolymer to be used in the production method of the second reference embodiment can be produced by employing, for example, a conventional method for the production of a polyester prepolymer. To be specific, the prepolymer can be typically produced by: subjecting a dicarboxylic acid and/or an ester formidable derivative thereof, and a diol to an esterification reaction and/or an ester exchange reaction; and subjecting the resultant to melt polycondensation using a polycondensation catalyst. Details about the foregoing are as described below. For example, the polyester is obtained by: loading a dicarboxylic acid and a diol into a slurry preparation tank; stirring and mixing the components to prepare raw material slurry; subjecting the slurry to an esterification reaction in an esterification reaction tank under normal pressure to increased pressure and heat while removing, for example, water produced by the reaction by distillation; transferring the resultant polyester low-molecular-weight body (oligomer) as an esterification reaction product to a polycondensation tank; and subjecting the oligomer to melt polycondensation using a polycondensation catalyst under reduced pressure and heat.

A catalyst to be used in the above esterification or ester exchange reaction, and a catalyst to be used in the polycondensation reaction are not particularly limited, and a catalyst appropriately selected from known catalysts can be used in any such reaction.

Specific examples of the catalyst used for the esterification or ester exchange reaction include a tungsten compound and a titanium compounds. As the tungsten compound, paratungstic acid, metatungstic acid, tungstic acid, silica tungstic acid, phosphorus tungstic acid, and salts thereof are exemplified. Of those, ammonium metatungstate, ammonium paratungstate, sodium tungstate, and tungstic acid are preferred, and ammonium metatungstate and ammonium paratungstate are particularly preferred.

Specific examples of the catalyst to be used in the polycondensation reaction include those exemplified in the above production method of the first reference embodiment. The above catalyst is typically used in an amount of 1 to 400 massppm with respect to a polyester prepolymer to be obtained. It should be noted that a titanium compound acts as an esterification catalyst and/or an ester exchange catalyst. The titanium catalyst is preferably used in any such reaction in an amount in the range.

In addition, any one of these exemplified in the above production method of the reference embodiment can be used as a stabilizer. The stabilizer is used in an amount of preferably 1 to 1, 000 massppm, or particularly preferably 2 to 200 massppm with respect to the polyester prepolymer to be obtained.

Further, a compound of an alkali metal or of an alkaline earth metal such as lithium acetate, sodium acetate, potassium acetate, magnesium acetate, magnesium hydroxide, a magnesium alkoxide, magnesium carbonate, potassium hydroxide, calcium hydroxide, calcium, acetate, or calcium carbonate can also be used together with the polycondensation catalyst. The compound is typically used in an amount of 1 to 100 massppm with respect to the polyester prepolymer to be obtained.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol.

It should be noted that those operations are performed by one or more of a continuous method, a batch method, and a semi-batch method, and each of the esterification reaction tank (or an ester exchange reaction tank) and a melt polycondensation reaction tank may be composed of one stage or multiple stages.

A polyesters prepolymer particularly preferably applicable to the production method of the second reference embodiment is, for example, a polyethylene terephthalate prepolymer and/or a polybutylene terephthalate prepolymer. Those prepolymers are each a polyester prepolymer typically produced by: composing the dicarboxylic acid mainly of terephthalic acid and/or dimethyl terephthalate; and composing the diol mainly of ethylene glycol and/or 1,4-butanediol.

The above phrase "composing ~ mainly of" as used herein refers to a state where terephthalic acid and/or dimethyl terephthalate accounts for 85 mol% or more, preferably 90 mol% or more, or more preferable 95 mol% or more of ail dicarboxylic acid components, and ethylene glycol and/or 1,4-butanediol accounts for 85 mol% or more, preferably 90 mol% or more, or more preferably 95 mol% or more of all diol components.

A dicarboxylic acid component except terephthalic acid described above is similar to that used in the above production method of the first reference embodiment.

A diol component except ethylene glycol and 1,4-butanediol described above is similar to that used in the above production method of the first reference embodiment.

Further, one or two or more kinds of compounds each having three or more functional groups, such as: polycarboxylic acids such as trimellitic acid and pyromellitic acid, and anhydrides of the acids; polyols such as trimethylolmethane, trimethylolethane, trimethylolpropane, pentaerythritol, glycerol, and hexanetriol; and hydroxycarboxylic acids such as malic acid and citric acid may be used as copolymerizable components.

The polyester obtained by the above melt polycondensation reaction is supplied to a die head connected to the melt polycondensation reaction tank through a pipe and/or a gear pump and/or a filter, and is ejected from multiple die holes provided for the tip of a die in a strand shape or a drop shape. The ejected polyester is granulated with, for example, a strand cutter, whereby the polyester prepolymer to be used in the production method of the second reference embodiment can be obtained.

The above polyester prepolymer to be used in the production method of the second reference embodiment has an average particle diameter of preferably 0.5 mm or more to 3.0 mm or less in ordinary cases. The average particle diameter is more preferably 0.6 mm or more, or particularly preferably 0.65 mm or more. Meanwhile, the average particle diameter is more preferably 2.0 mm or less, still more preferably 1.8 mm or less, or particularly preferably 1.6 mm or less. When the average particle diameter is less than 0.5 mm, the amount of a fine powder increases upon granulation of the prepolymer, so a trouble is apt to occur in any subsequent step during the transfer of the particles. When the average particle diameter exceeds 3.0 mm, a needed solid-phase polycondensation reaction time becomes extremely long irrespective of the presence or absence of an effect of the second reference embodiment.

In the case where granulation is conducted using, for example, a strand cutter, the polyester prepolymer having an average particle diameter in the above range can be obtained by adjusting a die wheel diameter, the ejection amount of the prepolymer, and the take-up speed of a strand.

The average particle diameter of the particles is determined as follows: a cumulative distribution curve is created by a dry sieving test method in accordance with JIS K0069, and the value at which a cumulative percentage reaches 50% is defined as the average particle diameter.

The polyester prepolymer to be used in the production method of the second reference embodiment has an intrinsic viscosity of 0.18 or more to 0.40L/g or less. A lower limit for the intrinsic viscosity is preferably 0.20 dL/g or more. On the other hand, an upper limit for the intrinsic viscosity is preferably 0.38 dL/g or less, or particularly preferably 0.35 dL/g or less. An intrinsic viscosity of less than 0.18 dL/g is not preferable because a fine powder is apt to be produced upon granulation of the prepolymer, and a needed solid-phase polycondensation time becomes extremely long even in the case where the effect of the second reference embodiment is taken into consideration. When the intrinsic viscosity exceeds 0.40 dL/g, an expensive facility is needed for stirring a highly viscous liquid and for subjecting the liquid to a high-vacuum reaction in a melt polycondensation step, with the result that the effect of the second reference embodiment is reduced.

The polyester prepolymer having an intrinsic viscosity in the above range can be obtained by controlling a polycondensation reaction temperature, a polycondensation reaction time, and a degree of decompression.

The polyester prepolymer to be used in the production method of the second reference embodiment has a terminal carboxyl group concentration of preferably 100 equivalents/ton or less, more preferably 70 equivalents/ton or less, still more preferably 40 equivalents/ton or less, or particularly preferably 20 equivalents/ton or less. When the terminal carboxyl group concentration exceeds 100 equivalents/ton, a polycondensation reaction rate tends to be small in a solid-phase polycondensation step as a subsequent step.

In addition, the above terminal carboxyl group concentration (AV) can be measured by: dissolving a sample in a solvent; and titrating the solution with sodium hydroxide.

Further, the above terminal carboxyl group concentration (AV) can be controlled on the basis of a temperature, a pressure, a mixed state of the components, or a method of adding a catalyst or ethylene glycol in an esterification reaction step and/or a polycondensation reaction step.

The polyester prepolymer obtained as described above is treated in a solid state with heat, and is subjected to polycondensation so as to have a predetermined intrinsic viscosity by the production method of the second reference embodiment. The heat treatment in the production method of the second reference embodiment is divided into multiple (n) steps such as temperature increase, crystallization, solid-phase polycondensation, and another temperature increase. The heat treatment in the production method of the second reference embodiment, which can be performed by a batch method, is preferably performed in a continuous manner in terms of production efficiency.

In addition, the production method of the second reference embodiment is a method of producing a polyester, and including performing the heat treatment of the above polyester prepolymer in a solid state to increase the intrinsic viscosity of the polyester prepolymer by 0.50 dL/g or more to obtain the polyester. The above increase in intrinsic viscosity by the heat treatment is preferably 0.53 dL/g or more, more preferably 0.55 dL/g or more, or particularly preferably 0.58 dL/g or more. Meanwhile, the above increase in intrinsic viscosity is typically 2.00 dL/g or less.

When the above increase in intrinsic viscosity is less than 0.50 dL/g, an effect of the second reference embodiment in increasing a solid-phase polycondensation rate does not lead to an improvement in productivity.

The solid-phase polycondensation step of the above heat treatment has at least two stages, that is, a j-th stage and a k-th stage downstream of the j-th stage, and at least one combination of the j-th stage and the k-th stage in which a temperature ($T_j$ (°C)) in the j-th stage and a temperature ($T_k$ (°C)) in the k-th stage satisfy (Eq. 1a) $T_j + 15 \leq T_k \leq 245$ is present. Further, J and k described above represent integers satisfying $1 \leq j < k \leq n$, and n represents an integer of 2 or more.

The temperature $T_j$ in the above j-th stage is 190°C or higher and 230°C or lower. A lower limit for $T_j$ is preferably 200°C. Meanwhile, an upper limit for $T_j$ is preferably 220°C, or more preferably 215°C. In the case where the above lower limit is lower than 190°C, a solid-phase polycondensation rate in the j-th stage becomes small, and a load in the k-th stage as a subsequent step becomes large. The case where the above upper limit exceeds 230°C is inconvenient because the temperature $T_k$ in the k-th stage exceeds 245°C, and, for example, the fusion of the polyester particles is apt to occur. In addition, as described above, the range of $T_k$ is represented as (Eq. 1a) $T_j + 15°C \leq T_k \leq 245°C$. When $T_k$ is lower than $T_j + 15°C$, an effect of improving a solid-phase polycondensation rate of the second reference embodiment cannot be obtained.

An increase in intrinsic viscosity in the above j-th stage is 0.03 dL/g or more, or preferably 0.05 dL/g or more. When the increase is less than 0.03 dL/g, effect in increasing on a solid-phase polycondensation rate in the k-th stage cannot be sufficiently obtained. An upper limit for the increase in intrinsic viscosity in the j-th stage has only to be set in order that a time period for the entirety of the heat treatment may be shortest and/or a quantity of heat to be inputted may be minimum, and is typically about 0.30 dL/g or less, preferably about 0.25 dL/g or less, or more preferably about 0.20 dL/g or less.

In addition, a difference in intrinsic viscosity between the polyester upon completion of the above j-th stage and the polyester upon initiation of the k-th stage is 0.10 dL/g or less, or preferably 0.05 dL/g or less. A difference in excess of 0.10 dL/g is not preferable because a heat treatment time from the completion of the j-th stage to the initiation of the k-th stage lengthens, with the result that the effect of the second reference embodiment obtained by increasing the temperature in the j-th stage to the temperature in the k-th stage within a short time period is not exerted.

Further, the above j-th stage and/or the above k-th stage is preferably performed in a moving bed, in particular, a continuous moving bed.

An h-th stage (temperature increase step) is preferably provided between the above j-th stage and the above k-th stage in order that transfer from the j-th stage to the k-th stage may be smoothly performed. A temperature Tha (°C) in the h-th stage preferably satisfies (Eq. 3a) $Tk \leq Tha \leq 250°C$. Setting Tha to be equal to or higher than Tk can reduce the frequency at which the polyester particles fuse with each other in the k-th stage. In addition, of course, each of Tj, Tha, and Tk is equal to or lower than the melting point of the polyester of the second reference embodiment. A residence time in the h-th stage has only to be set in order that a difference in intrinsic viscosity between the polyester upon completion of the j-th stage and the polyester upon initiation of the k-th stage is 0.10 dL/g or less, and is typically 90 minutes or less, preferably 60 minutes or less, or more preferably 40 minutes or less. When the above residence time of the temperature increase stop falls within the above range, the production method of the second reference embodiment exerts a significant effect of shortening a solid-phase polycondensation reaction time. A facility to be used in the h-th stage is not particularly limited as long as the facility can heat, and increase the temperature of, the polyester particles; the stage is preferable performed in a fluidized bed using an inert gas because, for example, the fusion of the particles occurs at a low frequency.

A c-th stage (crystallization step) involving the crystallization of at least part of the polyester prepolymer substantially in an amorphous state is preferably present prior to the j-th-stage solid-phase polycondensation step in the above heat treatment. The crystallization of at least part of the polyester prepolymer in an amorphous state can alleviate the fusion of the polyester particles in a subsequent step such as the j- or k-th stage. A temperature Tca (°C) in the above c-th stage preferably satisfies the following formula: $100 \leq Tca \leq 200°C$. When Tca is lower than 100°C, it requires a long time to crystallize the polyester prepolymer particles to such an extent that the particles do not fuse with each other, so the effect of the second reference embodiment is reduced. When Tca exceeds 200°C, the fusion of the polyester prepolymer particles tends to occur in the c-th stage. A facility to be used in the c-th stage is not particularly limited as long as the facility can heat the polyester prepolymer particles; the stage is preferably performed in a fluidized bed using an inert gas because, for example, the fusion of the particles occurs at a low frequency.

In addition, a step of increasing the temperature of the polyester prepolymer to Tca can be provided before the c-th stage, or an increase in temperature and the crystallization of the polyester prepolymer may be performed in the c-th stage. In addition, the polyester Prepolymer particles may be dried in the c-th stage. The polyester prepolymer particles may be dried in an initial stage of the solid-phase polycondensation.

Examples of an additionally preferable method of dividing the heat treatment in the production method of the second reference embodiment and temperature conditions for the steps obtained as a result of the division will be described. That is, it is preferable that: the above heat treatment include all of a first stage of crystallizing at least part of the polyester prepolymer substantially in an amorphous state at a temperature T1a (°C), a second stage of performing the solid-phase polycondensation of the crystallized polyester prepolymer at a temperature T2a (°C), a third stage of increasing the temperature of the product obtained in the second stage to a temperature T3a (°C) and a fourth stage of performing the solid-phase polycondensation of the product obtained in the third stage at a temperature T4a (°C) in the stated order; a value for an increase in intrinsic viscosity in the second stage be 0.03 dL/g or more; a difference between an intrinsic viscosity upon completion of the second stage and an intrinsic viscosity upon initiation of the fourth stage be 0.10 dL/g or less; and T1a T2a, T3a, and T4a (°C) satisfy the following (Eq. 4a) to (Eq. 7a):

$$(Eq. \ 4a) \ \ 100 \leq T1a \leq 200;$$

$$(Eq. \ 5a) \ \ 190 \leq T2a \leq 230;$$

$$(Eq. \ 6a) \ \ T4a \leq T3a \leq 250;$$

and

$$\text{(Eq. 7a)} \quad T2a+15 \leq T4a \leq 245.$$

The polyester to be obtained by the production method of the second reference embodiment can be suitably used as a raw material to be molded into, for example, a fiber, a film, or a bottle. In particular, the polyester can be turned into a bottle to be used for, for example, packaging a beverage by: molding the polyester into a preform by injection molding or extrusion molding; and subjecting the preform to stretch blow molding. In addition, the polyester can be turned into a bottle by direct blow molding.

In addition, the polyester can be turned into a film or a sheet by extrusion molding or stretch molding to be used in various applications including packaging materials. In addition, the polyester can be turned into a fiber by extrusion/stretch molding.

The method of producing a PET of the third reference embodiment (which may hereinafter be referred to as "production method of the third reference embodiment") relates to a method of efficiently producing a PET having a desired high molecular weight and suitable for molding by treating PET prepolymer particles obtained by melt polycondensation with heat under an inert gas atmosphere or reduced pressure, that is, progressing the polycondensation of the particles each in a solid state (solid-phase polycondensation). Requirements at that time are as follows: a low-molecular-weight PET prepolymer is used, and the solid-phase polycondensation is performed under the above-mentioned predetermined conditions in stages. The method to be performed under conditions controlled to the predetermined conditions provides a larger polycondensation reaction rate in a high-molecular-weight region than that in the case where the solid-phase polycondensation is initiated at a high temperature in a conventional method, in other words, the temperature in the second-stage solid-phase polycondensation step of the production method of the third reference embodiment. As a result, an improvement in productivity, such as the shortening of a solid-phase polycondensation time or a reduction in quantity of heat needed for the polycondensation can be achieved.

The heat treatment in the production method of the third reference embodiment means a step including a drying step, a temperature increase step, a crystallization step, and a solid-phase polycondensation step and intended for the treatment of a PET prepolymer in a solid state under a temperature condition exceeding normal temperature. In addition, in the third reference embodiment, an intrinsic viscosity is used as an indicator for the molecular weight of a PET.

Hereinafter, details about the third reference embodiment will be described.

A method of obtaining a PET prepolymer to be used in the production method of the third reference embodiment is not particularly limited, and the prepolymer can be produced by a conventional production method for a PET. To be specific, the prepolymer is typically produced by: subjecting dicarboxylic acid components mainly composed of terephthalic acid and/or an ester formable derivative of the terephthalic acid, and diol components mainly composed of ethylene glycol to an esterification reaction and/or an ester exchange reaction in the presence of an esterification or ester exchange catalyst as required; and subjecting the resultant to melt polycondensation by using a polycondensation catalyst. Details about the foregoing are as described below. For example, a PET is obtained by: loading a dicarboxylic acid component and a diol component as raw materials into a slurry preparation tank; stirring and mixing the components to prepare raw material slurry; subjecting the slurry to an esterification reaction in an esterification reaction tank under normal pressure to increased pressure and heat while removing, for example, water produced by the reaction by distillation; transferring the resultant PET low-molecular-weight body (oligomer) as an esterification reaction product to a polycondensation tank; and subjecting the oligomer to melt polycondensation using a polycondensation catalyst under reduced pressure and heat.

In the production method of the third, the phrase "mainly composed of terephthalic acid" refers to a state where terephthalic acid and/or an ester formable derivative of the acid accounts for 90 mol% or more, or preferably 95 mol% or more of all dicarboxylic acid components to be used in the production of the PET, and the phrase "mainly composed of ethylene glycol" refers to a state where ethylene glycol accounts for 90 mol% or more, or preferably 95 mol% or more of all diol components to be used in the production of the PET.

Here, a dicarboxylic acid component except terephthalic acid described above is similar to that used in the above production method of the first reference embodiment.

In addition, a diol component except ethylene glycol described above is similar to that used in the above production method of the first reference embodiment.

A catalyst to be used in the above esterification or ester exchange reaction, and a catalyst to be used in the polycondensation reaction are not particularly limited, and a catalyst appropriately selected from known catalysts can be used in any such reaction.

Specific examples of the catalyst to be used in the polycondensation reaction include those exemplified in the above production method of the first and the second reference embodiment. The above catalyst is typically used in an amount of 1 to 400 massppm with respect to a PET prepolymer to be obtained. It should be noted that a titanium compound acts as an esterification catalyst and/or an ester exchange catalyst. The titanium catalyst is preferably used in any such reaction in an amount in the range.

In addition, any one of those exemplified in the above production method of the first reference embodiment can be used as a stabilizer. The stabilizer is used in an amount of preferably 1 to 1,000 massppm, or particularly preferably 2 to 200 massppm with respect to the PET prepolymer to be obtained.

Further, a compound of an alkali metal or of an alkaline earth metal, such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst. The compound is typically used in an amount of 1 to 100 massppm with respect to the PET prepolymer to be obtained.

Specific conditions for the production of the PET prepolymer to be used in the production method of the third reference embodiment are as described below. For example, the prepolymer can be produced by a method involving: preparing a dicarboxylic acid mainly composed or terephthalic acid and/or an ester formable derivative of the terephthalic acid, and a diol mainly composed of ethylene glycol at a molar ratio "dicarboxylic acid component : glycol component" of typically 1: 1 to 1 : 2; subjecting the components to an esterification reaction in an esterification reaction tank in the presence of an esterification catalyst as required at a temperature of typically about 240 to 280°C under a pressure of typically normal pressure to about 0.4 MPa for about 1 to 10 hours or to an ester exchange reaction in the presence of an ester exchange catalyst; transferring the resultant product (PET low-molecular-weight body) to a polycondensation reaction tank; and subjecting the product to melt polycondensation. The melt polycondensation is performed using a polycondensation catalyst at a temperature of typically about 250 to 290°C under a pressure gradually reduced from normal pressure to be finally about 10 to 0.1 kPa in ordinary case and under stirring for such a time period that the product has an intrinsic viscosity of 0.18 dL/g to 0.4 dL/g.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol.

In addition, the above reaction can be performed by one or more of a continuous method, a batch method, and a semi-batch method. In addition, each of the esterification reaction tank (or an ester exchange reaction tank) and the melt polycondensation reaction tank may be composed of one stage or multiple stages.

The PET prepolymer obtained by the melt polycondensation reaction is supplied to a die head connected to the melt polycondensation reaction tank through a pipe and/or a gear pump and/or a filter, and is ejected from multiple die holes provided for the tip of a die in a strand shape or a drop shape. The PET ejected in a strand shape is cut with, for example, a strand cutter to be granulated into a pellet shape.

The PET prepolymer particles obtained by the melt polycondensation reaction to be used in the production method of the third reference embodiment have an average particle diameter of typically 0.5 to 3.0 mm. A lower limit for the average particle diameter is more preferably 0.6 mm, or particularly preferably 0.65 mm. Meanwhile, an upper limit for the average particle diameter is more preferably 2.0 mm, still more preferably 1.8 mm, or particularly preferably 1.6 mm. When the average particle diameter is less than 0.5 mm, the amount of a fine powder increases upon granulation of the prepolymer, so a trouble is apt to occur in any subsequent step during the transfer of the particles. When the average particle diameter exceeds 3.0 mm, a solid-phase polycondensation reaction time needed for the prepolymer to reach a desired molecular weight tends to be long irrespective of the presence or absence of an effect of the third reference embodiment.

Here, the average particle diameter of the particles is determined as follows: a cumulative distribution curve is created by a dry sieving test method described in JIS K0069, and the value at which a cumulative percentage reaches 50% is defined as the average particle diameter.

The PET prepolymer to be used in the production method of the third reference embodiment has an intrinsic viscosity of 0.18 to 0.40 dL/g. A lower limit for the intrinsic viscosity is preferably 0.20 dL/g. An upper limit for the intrinsic viscosity is preferably 0.38 dL/g, or particularly preferably 0.35. dL/g. An intrinsic viscosity of the prepolymer of less than the lower limit is not preferable because a fine powder is apt to be produced upon granulation of the prepolymer, and a solid-phase polycondensation reaction time needed for the prepolymer to reach a desired high molecular weight becomes extremely long even in the case where the effect of the third reference embodiment is taken into consideration. On the other hand, when the intrinsic viscosity exceeds the upper limit, even a prepolymer having a relatively high intrinsic viscosity cannot exert an effect of shortening a reaction time needed for the acquisition of a high-molecular-weight PET, and an expensive facility is needed for stirring a highly viscous liquid and for subjecting the liquid to a high-vacuum reaction in a melt polycondensation step, with the result that the effect of the third reference embodiment in the entire production process is reduced.

The PET prepolymer to be used in the production method of the third reference embodiment has a terminal carboxyl group concentration of preferably 100 equivalents/ton or less, more preferably 70 equivalents/ton or less, still more preferably 40 equivalents/ton or less, or particularly preferably 20 equivalents/ton or less. When the terminal carboxyl group concentration exceeds 100 equivalents/ton, a polycondensation reaction rate tends to be small in a solid-phase polycondensation step as a subsequent step.

The PET prepolymer particles obtained as described above are treated in a solid state with heat, and are subjected to solid-phase polycondensation so as to have a predetermined intrinsic viscosity by the production method of the third reference embodiment. The heat treatment of the third reference embodiment mainly includes multistage solid-phase polycondensation steps and a temperature increase step. Those steps, which can be performed by a batch method, are preferably performed in a continuous manner in terms of production efficiency. The PET to be obtained by the production method of the third reference embodiment. has an intrinsic viscosity of 0.70 dL/g or more. The production of a PET having an intrinsic viscosity of less than 0.70 dL/g is not preferable because the effect of the third reference embodiment, that is, a larger solid-phase polycondensation reaction rate than that in the case of a conventional method cannot be sufficiently exerted.

The heat treatment of the third reference embodiment includes at least two stages, that is, a first-stage solid-phase polycondensation step and a second-stage solid-phase polycondensation step below in the stated order:

(1) first-stage solid-phase polycondensation step;
a step of treating the PET prepolymer with heat at a temperature (T1b) of 200°C or higher and 225°C or lower under an inert gas atmosphere or reduced pressure for an average residence time of 0.5 hour or more and 10 hours or less so that a value for an increase in intrinsic viscosity of the prepolymer is 0.03 dL/g or more; and (2) second-stage solid-phase polycondensation step;
a step of treating the prepolymer after the first-stage solid-phase polycondensation step with heat at a temperature (T2b) of 215°C or higher and 240°C or lower under an inert gas atmosphere or reduced pressure for an average residence time of 2 hours or more,
provided that the above temperatures T1b (°C) and T2b (°C) satisfy the following (Eq. 1b):

$$T1b+15 \leq T2b \quad (Eq. \ 1b).$$

Those first- and second-stage solid-phase polycondensation steps are each performed under an inert gas atmosphere or reduced pressure. The term "inert gas" as used herein refers to a gas which: has an oxygen concentration of 0.1 vol% or less, or preferably 0.05 vol% or less; and is substantially non-reactive with a polyester (PET). Specific examples of the gas which is substantially non-reactive with a polyester include nitrogen, helium, neon, argon, xenon, and carbon dioxide; nitrogen is preferably used mainly in terms of cost efficiency. In addition, the term "reduced pressure" refers to a state where an absolute pressure is 2 kPa or less.

The temperature (T1b) of the first-stage solid-phase polycondensation step is 200°C or higher and 225°C or lower. A lower limit for T1b is preferably 205°C. An upper limit for T1b is preferably 222°C, or more preferably 220°C. In the case where T1b is lower than 200°C, a polycondensation reaction rate in the first-stage step becomes small, and a load in the subsequent second-stage step becomes large. The case where T1b exceeds 225°C is inconvenient because the temperature (T2b) of the second-stage solid-phase polycondensation step exceeds its upper limit, that is, 240°C, and, for example, the fusion of the PET particles is apt to occur.

In addition, T1b and T2b must satisfy T1b + 15°C ≤ T2b (Eq. 1b). When T2b is lower than T1b + 15°C, an effect of improving a solid-phase polycondensation reaction rate of the third reference embodiment cannot be obtained in some cases.

The average residence time of the first-stage solid-phase polycondensation step is typically 0.5 hour or more and 10 hours or less, though these values vary depending on the temperature of the step. A lower limit for the average residence time is preferably 1. 0 hour. An upper limit for the average residence time is preferably 9 hours, or more preferably 8 hours. In the case where the average residence time is less than 0.5 hour, a value for an increase in intrinsic viscosity in the first-stage step becomes small, and a load in the second-stage step becomes large. The case where the average residence time exceeds 5 hours is not efficient because a solid-phase polycondensation reaction rate reduces in the latter half of the first-stage step.

An increase in intrinsic viscosity in the first-stage solid-phase polycondensation step is 0.03 dL/g or more, or preferably 0.05 dL/g or more. When the increase is less than 0.03 dL/g, an effect in increasing on a solid-phase poly-condensation reaction rate in the second-stage step cannot be sufficiently obtained. An upper limit for the increase in intrinsic viscosity in the first-stage step has only to be set in order that a time period for the entirety of the heat treatment may be shortest and/or a quantity of heat to be inputted may be minimum, and is typically about 0.30 dL/g.

The temperature (T2b) of the second-stage solid-phase polycondensation step is 215°C or higher and 240°C or lower. A lower limit for T2b is preferably 220°C. An upper limit for T2b is preferably 237°C, or more preferably 235°C. The case where T2b is lower than 215°C is not preferable because it takes a long time for the prepolymer to achieve a target degree of polymerization. The case where T2b exceeds 240°C is inconvenient because, for example, the fusion of the PET particles is apt to occur.

The average residence time or the second-stage solid-phase polycondensation step is 2 hours or more, or preferably 4 hours or more, and is typically 36 hours or less. When the average residence time is less than 2 hours, a value for an increase in intrinsic viscosity in the second-stage step becomes small, and a load in the first-stage step for the acquisition of a PET having a desired degree of polymerization becomes large.

The above first-stage solid-phase polycondensation step and second-stage solid-phase polycondensation step of the production method of the third reference embodiment are preferably performed in a continuous manner, and a continuous moving bed is particularly preferably used.

In the production method of the third reference embodiment, a temperature increase step is preferably provided between the first-stage solid-phase polycondensation step and the second-stage solid-phase polycondensation step in order that the PET particles may be prevented from fusing with each other upon transfer from the first-stage step to the second-stage step. A temperature (Thb) condition in the temperature increase step is preferably T1b or higher and 250°C or lower, or more preferably T2b or higher and 250°C or lower. Setting Thb in the range can reduce the frequency at which the polymer particles fuse with each other in the second-stage solid-phase polycondensation step. A temperature is changed gradually between the first- and second-stage steps; when the PET particles after the heat treatment in the first stage are treated during the change particularly at such a temperature that Thb is T2b or higher within a short time period, a slight increase in intrinsic viscosity, or a certain change in crystal structure, of the PET occurs more significantly than that in the case where the particles are treated while the temperature is gradually increased. The occurrence may have a good effect on an additional increase in solid-phase polycondensation reaction rate in the second-stage step, and may be effective in preventing the fusion in the second-stage solid-phase polycondensation step.

A residence time in the temperature increase step is typically 30 minutes or less, preferably 25 minutes or less, or more preferably 20 minutes or less. A residence time of the temperature increase step in the range is preferable because the size of a facility to be used in the temperature increase step can be reduced. The facility to be used in the temperature increase step is not particularly limited as long as the facility can heat, and increase the temperature of, the PET particles; a fluidized bed using an inert gas is preferable because, for example, the fusion of the particles occurs at a low frequency.

A crystallization step of crystallizing at least part of the PET prepolymer substantially in an amorphous state is preferably provided prior to the first-stage solid-phase polycondensation step of the heat treatment of the third reference embodiment. The crystallization of at least part of the PET prepolymer can alleviate the fusion of the PET particles in a subsequent step such as the first- or second-stage solid-phase polycondensation step. The crystallization is performed by treating the PET prepolymer with heat; a temperature (Tc) of the crystallization step is preferably 140°C or higher and 200°C or lower. When the temperature is lower than 140°C, it requires a long time to crystallize the prepolymer particles to such an extent that the particles do not fuse with each other, so the effect of the third reference embodiment is reduced. When the temperature exceeds 200°C, the fusion of the prepolymer particles tends to occur. A residence time is typically 90 minutes or less, or preferably 60 minutes or less.

in the crystallization step, the crystallization of the PET prepolymer progresses, and a crystallinity to be achieved is typically about 30 to 60 mass%. A facility to be used in the crystallization step is not particularly limited as long as the facility can heat the PET particles; the step is preferably performed in a fluidized bed using an inert gas because, for example, the fusion of the particles occurs at a low frequency. A step of increasing the temperature of the PET prepolymer to Tcb can be provided before the crystallization step, or an increase in temperature, and the crystallization, of the PET prepolymer may be performed in the crystallization step. In addition, the prepolymer may be dried in the crystallization step. Alternatively, the prepolymer may be dried in an initial stage of the first-stage solid-phase polycondensation step.

The PET to be obtained by the production method of the third reference embodiment can be suitably used as a raw material to be molded into, for example, a fiber, a film, or a bottle. In particular, the PET can be turned into a bottle to be used for, for example, packaging a beverage by: molding the PET into a preform by injection molding or extrusion molding; and subjecting the preform to stretch blow molding. In addition, the PET can be turned into a bottle by direct blow molding.

In addition, the PET can be turned into a film or a sheet by extrusion molding or stretch molding to be used in various applications including packaging materials. In addition, the PET can be turned into a fiber by extrusion/stretch molding.

An embodiment of the method of producing a PET of the present invention (which may hereinafter be referred to as "production method of the present invention") will be described in detail.

The heat treatment of the present invention means a step including a drying step, a temperature increase step, a crystallization, step, and a solid-phase polycondensation step and intended for the treatment of a PET prepolymer in a solid state under a temperature condition exceeding normal temperature.

In addition, in the present invention, an intrinsic viscosity is used as an indicator for the molecular weight of a PET.

A method of obtaining a PET prepolymer to be used in the production method of the present invention is not particularly limited, and, for example, the prepolymer can be produced by a conventional production method for a PET.

To be specific, the prepolymer is typically produced by: subjecting dicarboxylic acid components mainly composed of terephthalic acid and/or an ester formable derivative of the terephthalic acid, and diol components mainly composed of ethylene glycol to an esterification reaction and/or an ester exchange reaction in the presence of an esterification or ester exchange catalyst as required; and subjecting the resultant to melt polycondensation using a polycondensation catalyst. Details about the foregoing are as described below. For example, a PET prepolymer is obtained by: loading a dicarboxylic acid component and a diol component as raw materials into a slurry preparation tank; stirring and mixing the components to prepare raw material slurry; subjecting the slurry to an esterification reaction in an esterification reaction tank under normal pressure to increased pressure and heat while removing, for example, water produced by the reaction by distillation; transferring the resultant PET low-molecular-weight body (oligomer) as an esterification reaction product to a polycondensation tank; and subjecting the oligomer to melt polycondensation using a polycondensation catalyst under reduced pressure and heat.

In the production method of the present invention, the phrase "mainly composed of terephthalic acid" refers to a state where terephthalic acid and/or an ester formable derivative of the acid accounts for 90 mol% or more, or preferably 95 mol% or more of all dicarboxylic acid components to be used in the production of the PET, and the phrase "mainly composed of ethylene glycol" refers to a state where ethylene glycol accounts for 90 mol% or more, or preferably 95 mol% or more of all diol components to be used in the production of the PET.

Here, a dicarboxylic acid component except terephthalic acid described above is similar to that used in the above production method of the first reference embodiment.

In addition, a diol component except ethylene glycol described above is similar to that used in the above production method of the first reference embodiment.

A catalyst to be used in the above esterification or ester exchange reaction, and a catalyst to be used in the polycondensation reaction are not particularly limited, and a catalyst appropriately selected from known catalysts can be used in any such reaction.

Specific examples of the catalyst to be used in the polycondensation reaction include those exemplified in the above production method of the first and the second reference embodiment. The above catalyst is typically used in an amount of 1 to 400 massppm with respect to a PET prepolymer to be obtained. It should be noted that a titanium compound acts as an esterification catalyst and/or an ester exchange catalyst. The titanium catalyst is preferably used in any such reaction in an amount in the range.

In addition, any one of those exemplified in the above production method of the first reference embodiment can be used as a stabilizer. The stabilizer is used in an amount of preferably 1 to 1, 000 massppm, or particularly preferably 2 to 200 massppm with respect to the PET prepolymer to be obtained.

Further, a compound of an alkali metal or of an alkaline earth metal such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst. The compound is typically used in an amount of 1 to 100 massppm with respect to the PET prepolymer to be obtained.

Specific conditions for the production of the PET prepolymer to be used in the production method of the present invention are as described below.

The prepolymer can be produced by a method involving: preparing a dicarboxylic acid mainly composed of terephthalic acid and/or an ester formable derivative of the terephthalic acid, and a diol mainly composed of ethylene glycol at a molar ratio "dicarboxylic acid component : glycol component" of typically 1 : 1 to 1 : 2; subjecting the components to an esterification reaction in an esterification reaction tank in the presence of an esterification catalyst as required at a temperature of typically about 240 to 280°C under a pressure of typically normal pressure to 0.4 MPa in a relative pressure against atomospheric pressure for about 1 to 10 hours or to an ester exchange reaction in the presence of an ester exchange catalyst; transferring the resultant product (PET low-molecular-weight body) to a polycondensation reaction tank; and subjecting the product to melt polycondensation. The melt polycondensation is performed using a polycondensation catalyst at a temperature of typically about 250 to 290°C under a pressure gradually reduced from normal pressure to be finally about 10 to 0.1 kPa in an absolute pressure in ordinary case and under stirring for such a time period that the product has an intrinsic viscosity of 0.18 dL/g to 0.4 dL/g as described below.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol. In addition, the above reaction can be performed by one or more of a continuous method, a batch method, and a semi-batch method. In addition, each of the esterification reaction tank (or an ester exchange reaction tank) and the melt polycondensation reaction tank may be composed of one stage or multiple stages.

The PET prepolymer obtained by the melt polycondensation reaction is supplied to a die head connected to the melt polycondensation reaction tank through a pipe and/or a gear pump and/or a filter, and is ejected from multiple die holes provided for the tip of a die in a strand shape or a drop shape. The PET prepolymer ejected in a strand shape is cut with, for example, a strand cutter to be granulated into a pellet shape.

The PET prepolymer particles obtained by the melt polycondensation reaction to be used in the production method of the present invention have an average mass of preferably 0.1 to 30 mg/particle. A lower limit for the average mass is more preferably 0.5 mg/particle, or particularly preferably 0.8 mg/particle. Meanwhile, an upper limit for the average mass is more preferably 10mg/particle, still more preferably 5 mg/particle, or particularly preferably 3 mg/particle. An average mass of the FET prepolymer particles to be used in the production method of the present invention equal to or larger than the above lower limit is more preferable because a trouble hardly occurs in any subsequent step or upon air transfer of the particles. In addition, an average mass of the particles equal to or smaller than the above upper limit is more preferable because a solid-phase polycondensation reaction time needed for the prepolymer to reach a desired molecular weight can be shortened. It should be noted that the term "average mass of a PET prepolymer" as used in the description refers to a value calculated by: measuring the total mass of 30 PET prepolymer particles with a precision balance to first decimal places (0.1 mg); and dividing the measured value by 30.

The PET prepolymer to be used in the production method of the present invention has an intrinsic viscosity of 0.18 to 0.40 dL/g. A lower limit for the intrinsic viscosity is preferably 0.20 dL/g. An upper limit for the intrinsic viscosity is preferably 0.38 dL/g, or particularly preferably 0.35 dL/g. An intrinsic viscosity of the Prepolymer of less than the lower limit is not preferable because a fine powder is apt to be produced upon granulation of the prepolymer, and a solid-phase polycondensation reaction time needed for the prepolymer to reach a desired high molecular weight becomes extremely long. On the other hand, when the intrinsic viscosity exceeds the upper limit, even a prepolymer having a relatively high intrinsic viscosity cannot exert an effect of shortening a reaction time needed for the acquisition of a high-molecular-weight PET, which is a feature of the production method of the present invention, and a facility is needed for stirring a highly viscous liquid and for subjecting the liquid to a high-vacuum reaction in a melt polycondensation step, with the result that the effect of the present invention in the entire production process is reduced.

The PET prepolymer of the present invention has a terminal carboxyl group concentration of preferably 100 equivalents/ton or less, the carboxyl group concentration is more preferably 70 equivalents/ton or less, still more preferably 40 equivalents/ton or less, or particularly preferably 20 equivalents/ton or less. When the terminal carboxyl group concentration in the PET prepolymer exceeds 100 equivalents/ton, a polycondensation reaction rate tends to be small in a solid-phase polycondensation step as a subsequent step.

The PET prepolymer particles obtained as described above are treated in a solid state with heat, and are subjected to solid-phase polycondensation so as to have a predetermined intrinsic viscosity by the production method of the present invention. The heat treatment of the present invention mainly includes multistage solid-phase polycondensation steps and a temperature increase step. Those steps, which can be performed by a batch method, are preferably performed in a continuous manner in terms of production efficiency. The PET to be obtained by the production method of the invention has an intrinsic viscosity of 0.70 dL/g or more. The production of a PET having an intrinsic viscosity of less than 0.70 dL/g is not preferable because the effect of the present invention, that is, a larger solid-phase polycondensation reaction rate than that in the case of a conventional method cannot be sufficiently exerted.

The heat treatment of the production method of the present invention includes at least a first-stage solid-phase polycondensation step, a temperature increase step, and a second-stage solid-phase polycondensation step described below in the stated order:

(1) the first-stage solid-phase polycondensation step;
the step is a step of treating the PET prepolymer with heat under an inert gas atmosphere or reduced pressure, and a temperature (T1c) of the heat treatment is 190°C or higher and 225°C or lower;
(2) the temperature increase step;
the step is a step of increasing the temperature of the PET prepolymer after the first-stage solid-phase polycondensation step under an inert gas atmosphere or reduced pressure from a temperature equal to or lower than the temperature (T1c) of the heat treatment of the first-stage solid-phase polycondensation step to a temperature (T2c) , the temperature of the PET prepolymer is increased from the temperature T1c (°C) to (T1c + 15) °C within 30 minutes, and the temperatures T1c (°C) and T2c (°C) satisfy the following (Eq. 1c) and (Eq. 2c):

$$T1c+15 \leq T2c \quad (Eq. \ 1c),$$

and

$$205°C \leq T2c \leq 240°C \quad (Eq. \ 2c);$$

and

(3) the second-stage solid-phase polycondensation step;

the step is a step of treating the PET prepolymer after the first-stage solid-phase polycondensation step and the temperature increase step with heat under an inert gas atmosphere or reduced pressure, and a temperature (T3c) of the heat treatment is 190°C or higher and 240°C or lower.

Those temperature increase step, and first- and second-stage solid-phase polycondensation steps are each performed under an inert gas atmosphere or reduced pressure. The term "inert gas" as used herein refers to a gas which: has an oxygen concentration of 0.1 vol% or less, or preferably 0. 05 vol% or less; and is substantially non-reactive with a polyester (PET). Specific examples of the gas which is substantially non-reactive with a polyester include nitrogen, helium, neon, argon, xenon, and carbon dioxide; nitrogen is preferably used mainly in terms of cost efficiency. In addition, the term "reduced pressure" refers to a state where an absolute pressure is 2 kPa or less.

The temperature (T1c) of the first-stage solid-phase polycondensation step is 190°C or higher and 225°C or lower. A lower limit for T1c is preferably 200°C, and more preferably 205°C. An upper limit for T1c is preferably 220°C. The case where T1c is lower than 190°C is not preferable because a polycondensation reaction rate in the first-stage step becomes small, and a load in the subsequent second-stage step becomes large. The case where T1c exceeds 225°C is inconvenient because the temperature (T2c) of the temperature increase step exceeds its upper limit, that is, 240°C as described below, and, for example, the fusion of the PET particles is apt to occur.

In addition, in the temperature increase step after the first-stage solid-phase polycondensation of the production method of the present invention, T1c and T2c must satisfy T1c + 15°C $\leq$ T2c (Eq. 1c), and the temperature of the PET prepolymer must be increased from Tlc by at least 15°C within at most 30 minutes. That is, T1c is 190°C or higher and 225°C or lower, and T1c and T2c satisfy (Eq. 1c), whereby T2c satisfies the following (Eq. 2c):

$$205°C \leq T2c \leq 240°C \quad (Eq. \ 2c).$$

With such constitution, an effect of the present invention, that is, a large solid-phase polycondensation rate after the temperature increase step can be obtained.

The reason why the effect of the present invention can be obtained by such temperature increase step is unclear, but the reason is assumed to be as described below.

That is, when the prepolymer is crystallized at a low molecular weight, a crystal structure is formed, whereby the mobility of a polyester molecular chain reduces, and part of terminal groups are inactivated. Tin particular, when the prepolymer is crystallized at a low molecular weight, the absolute value for the number of terminal groups to be inactivated increases, so a polycondensation reaction rate reduces in the latter half of the solid-phase polycondensation. In contrast, when the prepolymer is treated with heat during the crystallization so that its temperature is increased by 15°C or higher within a short time period, the prepolymer maintains a solid state, but the melting and recrystallization of the crystal occur, and an amorphous region where a large number of terminal groups are present is formed again, whereby part of inactivated terminal groups recover their activity, and the polycondensation reaction rate increases.

When the temperature of the prepolymer is increased by lower than 15°C or the time period needed for the temperature increase exceeds 30 minutes, an effect of improving the solid-phase poly condensation reaction rate of the production method of the present invention, in particular, an effect in the second-stage solid-phase polycondensation step cannot be obtained in some cases.

The temperature (T3c) of the second-stage solid-phase polycondensation step is 190°C or higher and 240°C or lower. A lower limit for T3c is preferably 210°C, or more preferably 220°C. An upper limit, for T3c is preferably 237°C, or more preferably 235°C. In the case where T3c is lower than 190°C, it takes a long time for the prepolymer to achieve a target degree of polymerization. In addition, the case where T3c exceeds 240°C is inconvenient because, for example, the fusion of the PET particles is apt to occur. It should be noted that the effect of the present invention, that is, a large solid-phase polycondensation rate is exerted even when T3c is lower than the temperature (T2c) of the temperature increase step.

The average residence time of the first-stage solid-phase polycondensation step is typically 0.5 hour or more and 10 hours or less, though these values vary depending on the temperature of T1c. A lower limit for the average residence time is preferably 1.0 hour. An upper limit for the average residence time is preferably 9 hours, or more preferably 8 hours. In the case where the average residence time of the first-stage solid-phase polycondensation step is 0.5 hour or more, a value for an increase in intrinsic viscosity in the first-stage solid-phase polycondensation step increases, and a load in the second-stage solid-phase polycondensation step is alleviated. In addition, in the case where the average residence time of the first-stage solid-phase polycondensation step is 10 hours or less, a reduction in solid-phase polycondensation reaction rate in the latter half of the first-stage solid-phase polycondensation step is small. Each of the cases is efficient and more preferable.

An increase in intrinsic viscosity in the first-stage solid-phase polycondensation step, that is, a difference in intrinsic viscosity between the PET before the first-stage solid-phase polycondensation step and the PET after the first-stage solid-phase polycondensation step is typically 0.03 dL/g or more, or preferably 0.05 dL/g or more. A value for the difference of 0.03 dL/g or more is more preferable because an effect in increasing the solid-phase polycondensation reaction rate in the second-stage solid-phase polycondensation step can be easily obtained. In addition, an upper limit for the increase in intrinsic viscosity in the first-stage solid-phase polycondensation step has only to be set in order that a time period for the entirety of the heat treatment may be shortest and/or a quantity of heat to be inputted may be minimum, and is typically about 0.30 dL/g.

A residence time in the temperature increase step is typically 60 minutes or less, preferably 40 minutes or less, or more preferably 30 minutes or less. A residence time of the temperature increase step in the range is more preferable because an effect of reducing the size of a facility to be used in the temperature increase step as well as the above effect of the temperature increase step, that is, a large solid-phase polycondensation rate is large. The facility to be used in the temperature increase step is not particularly limited as long as the facility can heat, and increase the temperature of, the PET particles; a fluidized bed using an inert gas is preferably used in ordinary cases because the fusion of the particles, the crushing of each of the particles, or the like occurs at a low frequency.

The prepolymer to be subjected to the second-stage solid-phase polycondensation step after the temperature increase step has an intrinsic viscosity of preferably 0.35 dL/g or more, more preferably 0.40 dL/g or more, still more preferably 0.43 dL/g or more, or particularly preferably 0.45 dL/g or more. An intrinsic viscosity of the prepolymer after the temperature increase step in the range is more preferable because a solid-phase polycondensation reaction rate in the second-stage solid-phase polycondensation step of the production method of the present invention increases, and, in particular, there is a tendency that the thermal fusion of a PET having a copolymerizable component under a load can be suppressed. A difference in intrinsic viscosity between the prepolymer to be subjected to the second-stage solid-phase polycondensation step after the temperature increase step and a polyester to be obtained after the second-stage solid-phase polycondensation step is typically 0.10 dL/g or more, or preferably 0.20 dL/g or more.

The average residence time of the second-stage solid-phase polycondensation step is typically 2 hours or more and 50 hours or less, though these values vary depending on the temperature of the step. A lower limit for the average residence time is preferably 4 hours or more. An average residence time in the range is more preferable because a value for an increase in intrinsic viscosity in the second-stage solid-phase polycondensation step increases, and a PET having a desired degree of polymerization can be efficiently obtained.

The above first-stage solid-phase polycondensation step and second-stage solid-phase polycondensation step of the present invention are preferably performed in a continuous manner, and a continuous moving bed is particularly preferably used in terms of, for example, production efficiency, reaction controllability, and operability.

A crystallization step of crystallizing at least part of the PET prepolymer substantially in an amorphous state is preferably provided prior to the first-stage solid-phase polycondensation step of the heat treatment of the present invention. The crystallization of at least part of the PET prepolymer can alleviate the fusion of the PET particles in a subsequent step such as the first- or second-stage solid-phase polycondensation step. The crystallization is performed by treating the PET prepolymer with heat; a temperature (Tx) of the crystallization step is normally 110°C or higher and 200 °C or lower, preferably 140°C or higher for a lower limit, and more preferably 160°C or higher for a lower limit. A temperature (Tx) of the crystallization step in the range is more preferable because the prepolymer particles hardly fuse with each other, and the prepolymer reaches a sufficient crystallinity within a relatively short time period. In addition, such temperature is more preferable because there is a tendency that the particles hardly fuse with each other in any subsequent step.

In the crystallization step, a PET prepolymer having a crystallinity of about 30 to 60 mass% is preferably obtained by progressing the crystallization of the PET prepolymer. A facility to be used in the crystallization step is not particularly limited as long as the facility can heat the PET particles; the step is preferably performed in a fluidized bed using an inert gas because, for example, the fusion of the particles occurs at a low frequency.

Further, a step of increasing the temperature of the PET prepolymer to Tx can be provided before the crystallization step, or an increase in temperature, and the crystallization, of the PET prepolymer may be performed in the crystallisation step. In addition, the prepolymer may be dried in the crystallization step. Alternatively, the prepolymer may be dried in an initial stage of the first-stage solid-phase polycondensation step.

A second-stage temperature increase step and a third-stage solid-phase polycondensation step may be further provided after the second-stage solid-phase polycondensation step of the heat treatment of the present invention. In this case, the temperature (T3c) of the second-stage solid-phase polycondensation step is preferably 190°C or higher and 225°C or lower, a temperature (T4c) of the second-stage temperature increase step is preferably higher than T3c (°C) by 15°C or higher, and is preferably 240°C or lower, and a temperature (T5c) of the third-stage solid-phase polycondensation step is preferably 205°C or higher and 240°C or lower. Here, the second-stage temperatures increase step is a step of increasing the temperature of the PET prepolymer from a temperature equal to or lower than T3c (°C) to the temperature (T4c), and the temperature of the PET prepolymer is preferably increased from the temperature T2c (°C) to (T2c+15) °C within 30 minutes. Similarly, a solid-phase polycondensation step and a temperature increase step may be alternately repeated three times or more.

As described above, a method involving alternately repeating a solid-phase polycondensation step at a relatively low temperature and a temperature increase step of increasing the temperature of a PET prepolymer to a relatively high temperature within a short time period is more preferable because of the following reason: in particular, upon solid-phase polycondensation of a PET prepolymer the particles of which are apt to fuse with each other owing to a large copolymerization amount, there are tendencies that the fusion when a solid-phase polycondensation step is performed in a moving bed can be suppressed and that the inactivation of part of terminal groups occurring in association with the performance of solid-phase polycondensation for a long time period can be suppressed, whereby an entire heat treatment time tends to be short.

Hereinafter, the present invention will be described in more detail by way of examples. However, the present invention is not limited to the following examples without departing from the gist of the present invention.

Methods of measuring various physical properties in examples and comparative examples are as described below.

<Intrinsic viscosity (IV)>

About 0.25 g of a sample was dissolved in about 25 mL of a mixed solvent containing phenol and 1,1,2,2-tetrachloroethane at a mass ratio of 1 : 1 so that the resultant solution might have a concentration of $1.00 \times 10^{-2}$ kg/L; an amorphous polyester or PET was dissolved at 110°C within 30 minutes, and a polyester or PET after solid-phase polycondensation was dissolved at 140°C within 30minutes. After that, the solution was cooled to 30°C. The falling seconds of the sample solution having a concentration of $1.00 \times 10^{-2}$ kg/L and only the solvent were measured with a fully automatic solution viscometer ("2CH type DJ504" manufactured by SENTEC Corp,. ltd.), and the intrinsic viscosity was calculated from the following equation. It should be noted that the above fully automatic solution viscometer performs the measurement on the basis of the following principle: a falling time required for a solution having a unit volume to fall in a capillary and a falling time in the case of a solvent alone are compared with each other.

$$IV = [(1+4K_H \cdot \eta_{sp})^{0.5} - 1] / (200K_H \cdot C)$$

where $\eta_{sp} = \eta/\eta_0 - 1$, $\eta$ represents the falling seconds of the sample solution, $\eta_0$ represents the falling seconds of the solvent, C represents the concentration of a polymer solution (kg/L), and $K_H$ represents Huggins' constant; an adopted value for $K_H$ was 0.33.

<Average mass of polyester and PET prepolymer particles>

An average mass per one particle of 30 PET prepolymer particles was calculated by: measuring the total mass of the particles with a precision balance to first decimal places (0.1 mg); and dividing the measured value by 30.

<Average particle diameter of polyester and PET prepolymer particles>

A cumulative distribution curve is created by a dry sieving test method described in JIS K0069, and the value at which a cumulative percentage reaches 50% is defined as an average particle diameter.

<Terminal carboxyl group concentration (AV)>

After having been pulverized, a sample was dried with a hot air dryer at 140°C for 15 minutes, and was cooled in a desiccator to room temperature. 0.1 g of the sample was precisely weighed and collected in a test tube. 3 mL of benzyl alcohol were added to dissolve the sample at 195°C within 3 minutes while a dry nitrogen gas was blown. Next, 5 mL of chloroform were gradually added to the solution, and the mixture was cooled to room temperature. One or two drops of a phenol red indicator were added to the solution, and the solution was titrated with a 0.1N solution of sodium hydroxide in benzyl alcohol under stirring while a dry nitrogen gas was blown. The amount in which the color of the indicator changed from a yellow to a red was defined as the endpoint of the titration. In addition, a similar operation was performed as a blank without the use of a polyester resin sample. A terminal carboxyl group concentration was calculated from the following equation by using those results:

$$AV \ (equivalents/ton) = (A-B) \times 0.1 \times f/W$$

where A represents the amount (μL) of the 0.1N solution of sodium hydroxide in benzyl alcohol needed for titration when the sample was used, B represents the amount (μL) of the 0.1N solution of sodium hydroxide in benzyl alcohol needed for titration in the blank, W represents the amount (g) of the polyester resin sample, and f represents the factor of the 0.1N solution of sodium hydroxide in benzyl alcohol.

It should be noted that the factor (f) of the 0.1N solution of sodium hydroxide in benzyl alcohol was calculated from the following equation by: collecting 5 mL of methanol in a test tube; adding one or two drops of a solution of phenol red in ethanol as an indicator; titrating methanol with 0.4 mL of a 0.1N solution of sodium hydroxide in benzyl alcohol up to a point of color change; collecting and adding 0.2 mL of 0.1N hydrochloric acid with a known factor as a standard solution; and titrating the resultant with a 0. 1N solution of sodium hydroxide in benzyl alcohol up to a point of color change again (the above operations were performed while a dry nitrogen gas was blown).

Factor (f) =factor of 0.1N hydrochloric acid x collective amount (μL) of 0.1N hydrochloric acid/titer (μL) of 0.1N solution of sodium hydroxide in benzyl alcohol

<Crystallinity ($X_c$)>

A crystallinity ($X_c$) was calculated from a density d (kg/m$^3$) of a sample by using the following equation while setting a perfect amorphous density $d_a$ to 1,335 kg/m$^3$ and a perfect crystal density $d_c$ to 1,455 kg/m$^3$:

$$X_c = (d-d_a) d_c / (d_c - d_a) d \times 100 \ (\%).$$

In addition, the density d of the sample was measured with a dry automatic density measuring device (Accupyc 1330 manufactured by Shimadzu Corporation) at a measurement temperature of 23°C by precisely weighing 6 to 8 g of the sample in a measurement cell.

<Diethylene glycol (DEG) copolymerization mol%>

50 ml of a 4N solution of potassium hydroxide in methanol are added to 5.00 g of PET particles as a sample. A reflux condenser is set on a vessel containing the mixture, and the mixture is refluxed under heat for 2 hours while being stirred on a hot plate with a magnetic stirrer (having a surface temperature of 200°C) so that the particles are hydrolyzed. After the resultant has been left standing to cool, about 20 g of high-purity terephthalic acid are added to the resultant, and the mixture is sufficiently shaken so as to be neutralized to have a pH of 9 or less. The resultant slurry is filtrated through a glass filter (11G-4), and is then washed with 2 ml of methanol twice. The filtrate and the washed liquid are mixed, and the mixture is used as a sample liquid to be subjected to gas chromatography. 1 μl of the sample liquid is injected with a microsyringe into a gas chromatography (type GC-14APF) manufactured by Shimadzu Corporation, and the mol% of a diethylene glycol component with respect to all glycol components is calculated from the areas of the peaks of ethylene glycol (EG) and the diethylene glycol component in accordance with the following equation.

$$Copolymerization \ mol\% \ of \ DEG = (A_{DEG} \times C_{fDEG}) / (\Sigma (A \times C_f)) \times 100$$

$A_{DEG}$: the area of the diethylene glycol component (μV-sec)
$C_{fDEG}$: the correction coefficient of the glycol component
A: the area of each glycol component (μV· sec)
$C_f$: the correction coefficient of each glycol component

(Polyester Prepolymer Production Example)

<Production of Polyester Prepolymer A>

A polyester continuous production apparatus was used, which included: a slurry preparation tank having a stirring machine, an ethylene glycol loading pipe, and a terephthalic acid loading pipe; a pipe for transferring slurry to a perfect mixing type first esterification reaction tank; the first esterification reaction tank and a perfect mixing type second esterification reaction tank each having a stirring machine, a separation column, a raw material receiving port, a catalyst loading pipe, and a reaction product transferring pipe; a pipe for transferring an esterification reaction product (oligomer) to a melt polycondensation reaction tank; a perfect mixing type first melt polycondensation reaction tank having a stirring machine, a separation column, an oligomer receiving port, and a catalyst loading pipe; plug flow type second and third melt polycondensation reaction tanks each having a stirring machine, a separation column, a polymer receiving port, and a polymer extracting port; and a granulating device for taking a polymer in a strand shape from the extracting port out of a die plate through a gear pump and cutting the polymer in a strand shape under water cooling (using a Pelletizer (P-USG 100) manufactured by Rieter Automatic GmbH as a strand cutter).

First, in the slurry preparation tank, slurry containing terephthalic acid and ethylene glycol at a molar ratio of 1 : 1.5 was prepared by adding a solution of orthophosphoric acid in ethylene glycol (concentration: 0.50 mass% in terms of a phosphorus atom) to terephthalic acid in order that a phosphorus concentration in a polyester prepolymer to be obtained in terms of a phosphorus atom might be 22 massppm. In addition, 400 parts by mass of bis-(β-hydroxyethyl) terephthalate were loaded into the first esterification reaction tank, and were melted under a nitrogen atmosphere. The slurry prepared in the slurry preparation tank was continuously charged at a rate of 135 parts bymass/h into the reaction tank with its temperature and pressure kept at 262°C and 96 kPaG (hereinafter, the symbol "G" represents a pressure relative to the atmospheric pressure), respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, an esterification reaction was performed under a temperature of 260°C and a pressure of 5 kPaG for a residence time of 1.5 hours while a solution of diantimony trioxide in ethylene glycol (concentration: 1.8 mass% in terms of an antimony atom) was continuously added in order that an antimony concentration in the polyester prepolymer to be obtained in terms of an antimony atom might be 183 massppm. The resultant was continuously transferred to the perfect mixing type first melt polycondensation reaction tank through the transferring pipe. In the first melt polycondensation reaction tank, a reaction was performed at a pressure in the poly-condensation reaction tank of 2.0 kPaA (hereinafter, the symbol "A" represents an absolute pressure) and a temperature in the polycondensation reaction tank of 278°C for a residence time of 1.0 hour. The resultant polyester prepolymer was passed through the second melt polycondensation reaction tank and the third melt polycondensation reaction tank. The prepolymer was continuously taken in a strand shape from the polymer extracting port out of the die plate through the gear pump and cut in a strand shape under water flow, whereby 4, 000 parts by mass of particles of Polyester Prepolymer A (average particle diameter 1.2 mm) were obtained.

Polyester Prepolymer A thus obtained had an intrinsic viscosity of 0.247 dL/g and a terminal carboxyl group concentration of 55 equivalents/ton.

(Polyester Prepolymer Production Example)

<Production of Polyester Prepolymer B>

Polyester Prepolymer B was produced by using the same polyester continuous production apparatus as that used in the production of Polyester Prepolymer A.

First, in the slurry preparation tank, slurry containing terephthalic acid and ethylene glycol at a molar ratio of 1 : 1.5 was prepared by adding a solution of tetrabutyl titanate in ethylene glycol (concentration: 0.075 mass% in terms of a titanium atom) to terephthalic acid in order that a titanium concentration in a polyester prepolymer to be obtained in terms of a titanium atom might be 8 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts by mass/h into the reaction tank with its temperature and pressure kept at 262°C and 96 kPaG, respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, a reaction was performed under a temperature of 260°C and a pressure of 5 kPaG for a residence time of 1.5 hours. The resultant was continuously transferred to the perfect mixing type first melt polycondensation reaction tank through the transferring pipe.

In the first melt polycondensation reaction tank, a reaction was performed at a pressure in the polycondensation reaction tank of 2.5 kPaA and a temperature in the polycondensation reaction tank of 273°C for a residence time of 1.0 hour while a solution of magnesium acetate tetrahydrate in ethylene glycol(concentration: 0.040 mass% in terms of a magnesium atom) and a solution of ethyl acid phosphate in ethylene glycol (concentration: 0.030 mass% in terms of a phosphorus atom) were continuously added to the reaction liquid phase in order that a magnesium concentration in the polyester prepolymer to be obtained in terms of a magnesium metal atom might be 8 massppm and a phosphorus concentration in the polyester prepolymer to be obtained in terms of a phosphorus atom might be 8 massppm. The reaction product was continuously transferred to the second melt polycondensation reaction tank. In the second melt polycondensation reaction tank, a melt polycondensation reaction was performed at a pressure of 2.0 kPaA and a temperature of 275°C for a residence time of 1.0 hour, and the reaction product was continuously transferred to the third melt polycondensation reaction tank through the transferring pipe. In the third melt polycondensation reaction tank, a melt polycondensation reaction was performed at a pressure of 2.0 kPaA and a temperature of 275°C for a residence time of 1. 2 hours. The resultant polyester prepolymer was continuously taken in a strand shape from the extracting port out of the die plate through the gear pump and cut in a strand shape under water flow, whereby 4, 000 parts by mass of particles of Polyester Prepolymer B (average particle diameter 1.2 mm) were obtained.

Polyester Prepolymer B thus obtained had an intrinsic viscosity of 0.373 dL/g and a terminal carboxyl group concentration of 31 equivalents/ton.


(Example 1)

30 g of the particles of Polyester Prepolymer A obtained in Polyester Prepolymer Production Example described above were spread on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the particles were subjected to a crystallization treatment at 180°C for 1 hour in a stream of nitrogen at a flow rate of 50 NL/min and a temperature of 180°C in the inert oven. Here, the symbol "NL" represents a volume (L) at 0°C and 1 atmospheric pressure.

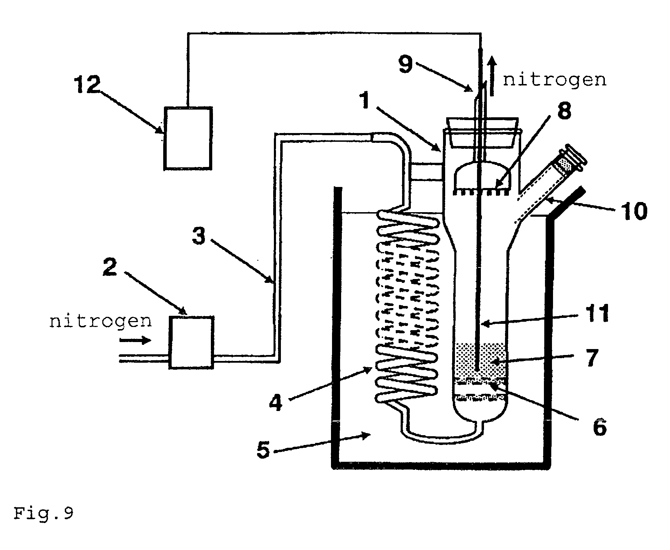

Polyester Prepolymer A after the crystallization treatment had an intrinsic viscosity of 0.250 dL/g. The prepolymer was treated with heat in a heat treatment apparatus made of glass shown in Fig. 9. In the heat treatment apparatus shown in Fig. 9, a sample is loaded into a heat treatment tube (1) made of glass and having a sample loading portion with an inner diameter of 45 mm. Nitrogen heated by oil charged into an oil bath (5) is introduced into the heat treatment tube (1) via a flow meter (2), a nitrogen-introducing tube (3), and a nitrogen-preheating tube (4). Introduced nitrogen is dispersed by a dispersion plate (6) at a lower portion of the heat treatment tube (1) , and is turned into an upward flow having a substantially uniform linear velocity in the heat treatment tube (1) to pass through a sample layer (7). Nitrogen that has passed through the sample layer (7) is exhausted from a gas purge port (9) to the outside of the heat treatment tube (1) via a filter (8) at an upper portion of the heat treatment tube (1). The heat treatment tube (1) has a branch (10), and the sample can be loaded into or collected from an opening portion (typically closed with a glass stopper) at an upper portion of the branch. In addition, the temperature of the sample in the heat treatment tube (1) can be measured with a temperature gauge (12) provided with a thermocouple (11). Since the temperature in the heat treatment tube (1) was lower than the temperature of the oil in the oil bath by 2°C in the ranges of the temperature and superficial linear velocity of this example, the temperature of the oil bath was adjusted to be higher than a target solid-phase polycondensation temperature by 2°C.

30 g of the particles of Polyester Prepolymer A after the crystallization treatment were loaded into the heat treatment tube (1) from the opening portion of the branch (10), and air in the tube was replaced with nitrogen circulating in the tube. After that, the flow rate of nitrogen in the heat treatment tube (1) was set with the flow meter (2) in order that the superficial linear velocity of nitrogen (the term "superficial linear velocity" as used herein refers to a superficial linear velocity at a portion corresponding to an inner diameter of 45 mm (the same holds true for the following description)) might be 0. 30 m/sec at 200°C. Then, the heat treatment apparatus was immersed in the first oil bath (5) adjusted to 202°C. The time point is defined as the starting point of first-stage solid-phase polycondensation at 200°C. 4 hours after that, the sample for intrinsic viscosity measurement was collected from the opening portion of the branch (10). After the collection of the sample, the flow rate of nitrogen was changed in order that the superficial linear velocity of nitrogen might be1.0m/sec at 235°C, and the heat treatment apparatus was transferred to the second oil bath (5) adjusted to 237°C. The time point is defined as the starting point of a temperature increase step at 235°C. 10 minutes after that, the sample for intrinsic viscosity measurement was collected from the opening portion of the branch (10). After the collection of the sample, the flow rate of nitrogen was changed in order that the superficial linear velocity of nitrogen might be 0.30 m/sec at 230°C, and the heat treatment apparatus was transferred to the oil bath (5) adjusted to 232°C. The time point was defined as the starting point of second-stage solid-phase polycondensation at 230°C. The sample for intrinsic viscosity measurement was collected at a time point of each of 12 hours, 24 hours, and 36 hours after the starting point of the second-stage solid-phase polycondensation, and its intrinsic viscosity was measured at each time point. Table 1 shows conditions for the heat treatment and the results of the measurement. In the table, for example, a time period for the intrinsic viscosity (IV) to reach 0.747 dL/g (time to reach IV = 0.747) was determined by: connecting data near IV = 0. 747 in the second-stage solid-phase polycondensation step with a straight line in orthogonal coordinates; defining a heat treatment time at IV = 0.747 as a second-stage solid-phase polycondensation step time; and adding a first-stage solid-phase polycondensation step time and a temperature increase step time to the second-stage solid-phase polycondensation step time. It should be noted that a crystallization step time was not included.

(Example 2)

The same process as that of Example 1 was performed except that: a temperature for the first-stage solid-phase polycondensation in Example 1 was set to 210°C by setting the temperature of the first oil bath to 212°C; and a time for the solid-phase polycondensation in Example 1 was changed to 2 hours. Table 1 shows the results.

(Example 3)

The same process as that of Example 2 was performed except that a time for the first-stage solid-phase polycondensation in Example 2 was changed to 4 hours. Table 1 shows the results.

(Comparative Example 1)

After the loading of the sample in Example 2, the first-stage solid-phase polycondensation operation was completely omitted, and the temperature increase step and the second-stage solid-phase polycondensation were each performed in the same manner as in Example 2. Table 1 shows the results.

(Comparative Example 2)

The same process as that of Example 2 was performed except that a temperature for the first-stage solid-phase polycondensation in Example 2 was changed to 220°C by setting the temperature of the first oil bath to 222°C. Table 1 shows the results.

(Comparative Example 3)

The same process as that of Example 2 was performed except the following points: in Example 2, after the first-stage solid-phase polycondensation, the flow rate of nitrogen was subsequently changed in a state where the heat treatment apparatus was immersed in the first oil bath (5) in order that the superficial linear velocity of nitrogen might be 1.0 m/sec at 220°C, the temperature of the oil in the oil bath (5) was continuously increased from 212°C to 232 °C over 120 minutes, and, after 120 minutes had passed, the sample for intrinsic viscosity measurement was collected from the opening portion of the branch (10), the flow rate of nitrogen was subsequently changed in a state where the heat treatment apparatus was immersed in the first oil bath (5) in order that the superficial linear velocity of nitrogen might be 0.30 m/sec at 230°C, and the time point was defined as the starting point of the second-stage solid-phase polycondensation at 230°C. Table 1 shows the results.
[Table 1]

| | First-stage solid-phase polycondensation step | | | | Temperature increase step | | | | Second-stage solid-phase polycondensation step | | | | Time to reach IV ]= 0.747Δ IV=0.500 hours | Time to reach IV = 0.777Δ IV=0.530 hours | Time to reac h IV = 0.797Δ IV=0 .550 hours |
|---|---|---|---|---|---|---|---|---|---|---|---|---|---|---|---|
| | T1 °C | Reaction time hours | IV dL/g | ΔIV dL/g | Th °C | Residence time minutes | IV dL/g | ΔIV dL/(g | T2 °C | After 12 hours dL/g | After 24 hours IV dL/g | After 36 hours IVdL/g | | | |
| Example 1 | 200 | 4 | 0.314 | 0.064 | 235 | 10 | 0.338 | 0.024 | 230 | 0.763 | 0.959 | - | 15.7 | 17.0 | 18.2. |
| Example 2 | 210 | 2 | 0.309 | 0.059 | 235 | 10 | 0.327 | 0.018 | 230 | 0.778 | 0.971 | 1.052 | 13.3 | 14.1 | 15.3 |
| Example 3 | 210 | 4 | 0.348 | 0.098 | 235 | 20 | 0.372 | 0.024 | 230 | 0.833 | 0.989 | 1.090 | 13.9 | 14.7 | 15.2 |
| Comparative Example 1 | --- | 0 | --- | --- | 235 | 10 | 0.273 | --- | 230 | 0.675 | 0.866 | 0.929 | 16.7 | 18.6 | 19.8 |
| Comparative Example 2 | 220 | 2 | 0.362 | 0.112 | 235 | 10 | 0.375 | 0.013 | 230 | 0.719 | 0.845 | 0.905 | 16.8 | 19.7 | 21.6 |
| Comparative Example 3 | 210 | 2 | 0.309 | 0.059 | 210 -23 0 | 120 | 0.420 | 0.111 | 230 | 0.695 | 0.887 | 0.920 | 19.3 | 21.1 | 22.4 |

(Example 4)

The same process as that of Example 2 was performed except that: Polyester Prepolymer A in Example 2 was replaced with Polyester Prepolymer B; and the time at which the sample was collected in the second-stage solid-phase polycondensation step was changed to a time point of each of 8 hours, 16 hours, and 32 hours after the starting point of the step. Polyester Prepolymer B after the crystallization treatment had an intrinsic viscosity IV of 0.380 dL/g. Table 2 shows the results.

(Example 5)

The same process as that of Example 4 was performed except that, in Example 4, after the first-stage solid-phase polycondensation, the temperature increase step at 235°C was omitted, and the second-stage solid-phase poly-condensation at 230°C was immediately performed. Table 2 shows the results.

(Example 6)

The same process as that of Example 4 was performed except the following points: in Example 4, after the first-stage solid-phase polycondensation, the flow rate of nitrogen was subsequently changed in a state where the heat treatment apparatus was immersed in the first oil bath (5) in order that the superficial linear velocity of nitrogen might be 1.0 m/sec at 220°C, the temperature of the oil in the oil bath (5) was continuously increased from 212°C to 232°C over 20 minutes, and, after 20 minutes had passed, the sample for intrinsic viscosity measurement was collected from the opening portion of the branch (10), the flow rate of nitrogen was subsequently changed in a state where the heat treatment apparatus was immersed in the first oil bath (5) in order that the superficial linear velocity of nitrogen might be 0.30 m/sec at 230°C, and the time point was defined as the starting point of the second-stage solid-phase poly-condensation at 230°C. Table 2 shows the results.

(Comparative Example 4)

The same process as that of Example 4 was performed except that, in Example 4, after the loading of the sample, the first-stage solid-phase polycondensation and the temperature increase step at 235°C were omitted, and the second-stage solid-phase polycondensation at 230°C was immediately performed. Table 2 shows the results.
[Table 2]

| | First-stage solid-phase polycondensation step | | | | Temperature increase step | | | | Second-stage solid-phase polycondensation step | | | | Time to reach IV = 0.873 ΔIV=0.500 hours | Time to reach IV = 0.903 Δ IV=0.530 hours |
|---|---|---|---|---|---|---|---|---|---|---|---|---|---|---|
| | T1 °C | Reaction time hours | IV dL/g | ΔIV dL/g | Th °C | Residence time minutes | IV dL/g | ΔIV dL/g | T2 °C | After 8 hours IV dL/g | After 16 hours IV dL/g | After 32 hours IV dL/g | | |
| Example 4 | 210 | 2 | 0.448 | 0.068 | 235 | 10 | 0.483 | 0.035 | 230 | 0.875 | 1.035 | --- | 10.1 | 11.6 |
| Example 5 | 210 | 2 | 0.448 | 0.068 | --- | 0 | --- | 0.000 | 230 | 0.830 | 0.982 | --- | 12.3 | 13.8 |
| Example 6 | 210 | 2 | 0.448 | 0.068 | 210 -230 | 30 | 0.495 | 0.047 | 230 | 0.848 | 0.967 | --- | 12.2 | 14.2m |
| Comparative Example 4 | --- | 0 | --- | --- | --- | 0 | --- | --- | 230 | 0.809 | 0.899 | 1.021 | 13.7 | 16.51 |

EP 2 202 259 B1

In each of the examples and the comparative examples, it was able to take a sample after the heat treatment out of the heat treatment tube (1) with ease, and no fusion of the particles of the sample was observed.

In Comparative Example 1, only the second-stage solid-phase polycondensation step at a high temperature is the solid-phase polycondensation step, so a solid-phase polycondensation rate is small. In Comparative Example 2, a difference in solid-phase polycondensation temperature between the first-stage solid-phase polycondensation step and the second-stage solid-phase polycondensation step is lower than 15°C, so a solid-phase polycondensation rate is small. In Comparative Example 3, a difference between an intrinsic viscosity upon completion of the first-stage solid-phase polycondensation step and an intrinsic viscosity upon initiation of the second-stage solid-phase polycondensation step is 0.10 dL/g or more, so a solid-phase polycondensation rate is small. In Comparative Example 4, only the second-stage solid-phase polycondensation step at a high temperature is performed, so a solid-phase polycondensation rate is small.

(PET Prepolymer Production Example)

<Production of PET Prepolymer A>

A PET prepolymer continuous production apparatus was used, which included: a slurry preparation tank having a stirring machine, an ethylene glycol loading pipe, and a terephthalic acid loading pipe; pipes each for transferring slurry and an esterification reaction product to each an esterification reaction tank; the first esterification reaction tank and a perfect mixing type second esterification reaction tank each having a stirring machine, a separation column, a raw material receiving port, a catalyst loading pipe, and a reaction product transferring pipe; a pipe for transferring an esterification reaction product (oligomer) to a melt polycondensation reaction tank; a perfect mixing type first melt poly-condensation reaction tank having a stirring machine, a separation column, an oligomer receiving port, and a catalyst loading pipe; plug flow type second and third melt polycondensation reaction tanks each having a stirring machine, a separation column, a polymer receiving port, and a polymer extracting port; and a granulating device for taking a prepolymer in a strand shape from the extracting port out of a die plate through a gear pump and cutting the polymer in a strand shape under water cooling (using a Pelletizer (P-USG 100) manufactured by Rieter Automatic GmbH as a strand cutter).

First, in the slurry preparation tank, slurry containing terephthalic acid and ethylene glycol at a molar ratio of 1 : 1.5 was prepared by adding a solution of orthophosphoric acid in ethylene glycol (concentration: 0.50 mass% in terms of a phosphorus atom) to terephthalic acid in order that a phosphorus concentration in a PET prepolymer to be obtained in terms of a phosphorus atom might be 22 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts bymass/h into the reaction tank with its temperature and pressure kept at 262°C and 96 kPaG (hereinafter, the symbol "G" represents a pressure relative to the atmospheric pressure), respectively in order that an average residence time in terms of the PET prepolymer might be 4.5 hours. An esterification reaction was performed while produced water was removed by distillation from the separation column. The reaction liquid was continuously transferred to the second esterification reaction tank.

In the second esterification reaction tank, an esterification reaction was performed under a temperature of 260°C and a pressure of 5 kPaG for a residence time of 1.5 hours while a solution of diantimony trioxide in ethylene glycol (concentration: 1.8 mass% in terms of an antimony atom) was continuously added in order that an antimony concentration in the PET prepolymer to be obtained in terms of an antimony atom might be 183 massppm. The resultant was continuously transferred to the perfect mixing type first melt polycondensation reaction tank through the transferring pipe. In the first melt polycondensation reaction tank, a reaction was performed at a pressure in the polycondensation reaction tank of 2.5 kPaA (hereinafter, the symbol "A" represents an absolute pressure) and a temperature in the polycondensation reaction tank of 273°C for a residence time of 1.0 hour. The resultant PET prepolymer was passed through the second melt polycondensation reaction tank and the third melt polycondensation reaction tank. The prepolymer was continuously taken in a strand shape from the polymer extracting port out of the die plate through the gear pump and cut in a strand shape under water cooling, whereby 4,000 parts by mass of particles of PET Prepolymer A (average particle diameter 1.2 mm) were obtained.

PET Prepolymer A thus obtained had an intrinsic viscosity of 0.247 dL/g and a terminal carboxyl group concentration of 55 equivalents/ton.

<Production of PET Prepolymer B>

PET Prepolymer B was produced by using the same PET prepolymer continuous production apparatus as that used in the production of PET Prepolymer A.

First, in the slurry preparation tank, slurry containing terephthalic acid and ethylene glycol at a molar ratio of 1 : 1.5 was prepared by adding a solution of tetrabutyl titanate in ethylene glycol (concentration: 0.075 mass% in terms of a titanium atom) to terephthalic acid in order that a titanium concentration in a PET prepolymer to be obtained in terms of a titanium atom might be 8 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts by mass/h into the reaction tank with its temperature and pressure kept at 262°C and 96 kPaG, respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, a reaction was performed under a temperature of 260 °C and a pressure of 5 kPaG for a residence time of 1.5 hours. The reaction product was continuously transferred to the perfect mixing type first melt polycondensation reaction tank through the transferring pipe.

In the first melt polycondensation reaction tank, a reaction was performed at a pressure in the polycondensation reaction tank of 4.5 kPaA and a temperature in the polycondensation reaction tank of 271 °C for a residence time of 1.0 hour while a solution of magnesium acetate tetrahydrate in ethylene glycol (concentration: 0.040 mass% in terms of a magnesium atom)) and a solution of ethyl acid phosphate in ethylene glycol (concentration: 0.030 mass% in terms of a phosphorus atom) were continuously added to the reaction liquid phase in order that a magnesium concentration in the PET to be obtained in terms of a magnesium metal atom might be 8 massppm and a phosphorus concentration in the PET to be obtained in terms of a phosphorus atom might be 8 massppm. The reaction product was continuously transferred to the second melt polycondensation reaction tank. In the second melt polycondensation reaction tank, a melt polycondensation reaction was performed at a pressure of 3.5 kPaA and a temperature of 274°C for a residence time of 1.0 hour, and the reaction product was continuously transferred to the third melt polycondensation reaction tank through the transferring pipe.

In the third melt polycondensation react ion tank, a melt polycondensation reaction was performed at a pressure of 3.5 kPaA and a temperature of 275°C for a residence time of 1.2 hours. The resultant PET prepolymer was continuously taken in a strand shape from the extracting port out of the die plate through the gear pump and cut in a strand shape under water cooling, whereby 4, 000 parts by mass of particles of PET Prepolymer B (average particle diameter 1.2 mm) were obtained.

PET Prepolymer B thus obtained had an intrinsic viscosity of 0.308 dL/g and a terminal carboxyl group concentration of 35 equivalents/ton.

<Crystallization step>

30 g of the particles of PET Prepolymer A obtained in the above Production Example described above were spread on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the particles were subjected to a crystallization treatment at 180°C for 1 hour in a stream of nitrogen at a flow rate of 50 NL/min and a temperature of 180°C in the inert oven. Here, the symbol "NL" represents a volume (L) at 0°C and 1 atmospheric pressure.

The sample of PET Prepolymer A after the crystallization treatment had an intrinsic viscosity of 0.250 dL/g.

The particles of PET Prepolymer B were similarly subjected to a crystallization treatment. PET Prepolymer B as a sample after the crystallization treatment had an intrinsic viscosity IV of 0. 321 dL/g.

(Example 7)

The particles of PET Prepolymer A subjected to the above crystallization treatment were treated with heat in the heat treatment apparatus made of glass shown in Fig. 9.

The heat treatment apparatus is as described above.

30 g of the particles of PET Prepolymer A after the crystallization treatment were loaded into the heat treatment tube (1) from the opening portion of the branch (10), and air in the tube was replaced with nitrogen circulating in the tube. After that, the flow rate of nitrogen in the heat treatment tube (1) was set with the flow meter (2) in order that the superficial linear velocity of nitrogen (the term "superficial linear velocity" as used herein refers to a superficial linear velocity at a portion corresponding to an inner diameter of 45 mm (the same holds true for the following description)) might be 0.30 m/sec at 200°C. Then, the heat treatment apparatus was immersed in the first oil bath (5) adjusted to 202°C. The time point is defined as the starting point of first-stage solid-phase polycondensation at 200°C. 4 hours after that, the sample for intrinsic viscosity measurement was collected from the opening portion of the branch (10). After the collection of the sample, the flow rate of nitrogen was changed in order that the superficial linear velocity of nitrogen might be 1.0 m/sec at 235°C, and the heat treatment apparatus was transferred to the second oil bath (5) adjusted to 237°C. Thetimepoint is defined as the starting point of a temperature increase step at 235°C. 10 minutes after that, the sample for intrinsic viscosity measurement was collected from the opening portion of the branch (10).

After the collection of the sample, the flow rate of nitrogen was changed in order that the superficial linear velocity of nitrogen might be 0.30 m/sec at 230°C, and the heat treatment apparatus was transferred to the oil bath (5) adjusted to 232°C. The time point was defined as the starting point of second-stage solid-phase polycondensation at 230°C. The sample for intrinsic viscosity measurement was collected at a time point of each of 12 hours, 24 hours, and 36 hours after the starting point of the second-stage solid-phase polycondensation. The intrinsic viscosity of the sample for measurement collected after each of the first-stage solid-phase polycondensation, the temperature increase step, and the second-stage solid-phase polycondensation was measured. Table 3 shows conditions for the heat treatment and the results of the measurement. In the table, a time to reach the intrinsic viscosity IV = 0.90 dL/g was determined by: connecting data near IV = 0.90 with a straight line in orthogonal coordinates; defining a heat treatment time at IV = 0.90 as a second-stage solid-phase polycondensation step time; and adding a first-stage solid-phase polycondensation time and a temperature increase step time to the second-stage solid-phase polycondensation step time. A crystallization step time was not included.

(Example 8)

The same process as that of Example 7 was performed except that: a temperature for the first-stage solid-phase polycondensation in Example 7 was set to 210°C by setting the temperature of the first oil bath to 212°C; and a time for the solid-phase polycondensation in Example 8 was changed to 2 hours. Table 3 shows the results.

(Example 9)

The same process as that of Example 8 was performed except that a time for the first-stage solid-phase polycondensation in Example 8 was changed to 4 hours. Table 3 shows the results.

(Example 10)

The same process as that of Example 8 was performed except that a time for the first-stage solid-phase polycondensation in Example 8 was changed to 8 hours. Table 3 shows the results.

(Comparative Example 5)

After the loading of the particles of PET Prepolymer A after the crystallization treatment in Example 8, the first-stage solid-phase polycondensation operation was completely omitted, and the temperature increase step and the second-stage solid-phase polycondensation were each performed in the same manner as in Example 8. Table 3 shows the results.

(Comparative Example 6)

The same process as that of Example 8 was performed except that a temperature for the first-stage solid-phase polycondensation in Example 8 was changed to 220°C by setting the temperature of the first oil bath to 222°C. Table 3 shows the results.

(Example 11)

The same process as that of Example 8 was performed except that: the particles of PET Prepolymer A after the crystallization treatment in Example 8 were replaced with the particles of PET Prepolymer B; and the time at which the sample was collected in the second-stage solid-phase polycondensation step was changed to a time point of each of 8 hours, 16 hours, and 32 hours after the starting point of the step. Table 4 shows the results. In the table, a time to reach the intrinsic viscosity IV = 0.80 dL/g was determined by: connecting data near IV = 0. 80 with a straight line in orthogonal coordinates; defining a heat treatment time at IV = 0.80 as a second-stage solid-phase polycondensation step time; and adding a first-stage solid-phase polycondensation time and a temperature increase step time to the second-stage solid-phase polycondensation step time. A crystallization step time was not included.

(Example 12)

The same process as that of Example 11 was performed except that, in Example 11, after the first-stage solid-phase polycondensation, the temperature increase step at 235 °C was omitted, and the second-stage solid-phase polycondensation at 230°C was immediately performed. Table 4 shows the results.

(Comparative Example 7)

The same process as that of Example 12 was performed except that a temperature for the first-stage solid-phase polycondensation in Example 12 was changed to 220°C by setting the temperature of the first oil bath to 222°C. Table 4 shows the results.

(Comparative Example 8)

The same process as that of Example 11 was performed except that, in Example 11, after the loading of the particles of PET Prepolymer B after the crystallization treatment, the first-stage solid-phase polycondensation and the temperature increase step at 235°C were omitted, and the second-stage solid-phase polycondensation at 230°C was immediately performed. Table 4 shows the results.

[Table 3]

Table 3

| | First-stage solid-phase polycondensation step | | | | Temperature increase step | | | Second-stage solid-phase polycondensation step | | | | Time two reach IV = 0.90 hours |
|---|---|---|---|---|---|---|---|---|---|---|---|---|
| | T1 °C | Reaction time hours | IV dL/g | ΔIV dL/g | Th °C | Residence time minutes | IV dL/g | T2 °C | After 12 hours IV dL/g | After 24 hours IV dL/g | After 36 hours IV dL/g | |
| Example 7 | 200 | 4 | 0.314 | 0.064 | 235 | 10 | 0.338 | 230 | 0.763 | 0.959 | --- | 24.6 |
| Example 8 | 210 | 2 | 0.309 | 0.059 | 235 | 10 | 0.327 | 230 | 0.778 | 0.971 | 1.052 | 21.8 |
| Example 9 | 210 | 4 | 0.348 | 0.098 | 235 | 10 | 0.372 | 230 | 0.833 | 0.989 | 1.090 | 21.3 |
| Example 10 | 210 | 8 | 0.421 | 0.171 | 235 | 10 | 0.436 | 230 | 0.860 | 1.049 | --- | 22.7 |
| Comparative Example 5 | --- | 0 | --- | --- | 235 | 10 | 0.273 | 230 | 0.675 | 0.866 | 0.929 | 30.6 |
| Comparative Example 6 | 220 | 2 | 0.362 | 0.112 | 235 | 10 | 0.375 | 230 | 0.719 | 0.845 | 0.905 | 37.2 |

[Table 4]

Table 4

| | First-stage solid-phase polycondensation step | | | | Temperature increase step | | | Second-stage solid-phase polycondensation step | | | | Time to reach IV = 0.80 hours |
|---|---|---|---|---|---|---|---|---|---|---|---|---|
| | T1 °C | Reaction time hours | IV dL/g | ΔIV dL/g | Th °C | Residence time minutes | IV dL/g | T2 °C | After 8 hours IV dL/g | After 16 hours IV dL/g | After 32 hours IV dL/g | |
| Example 11 | 210 | 2 | 0.407 | 0.086 | 235 | 10 | 0.442 | 230 | 0.792 | 0.853 | 0.976 | 12.3 |
| Example 12 | 210 | 2 | 0.407 | 0.086 | --- | 0 | --- | 230 | 0.760 | 0.816 | 0.936 | 15.7 |
| Comparative Example 7 | 220 | 2 | 0.440 | 0.119 | --- | 0 | --- | 230 | --- | 0.767 | 0.878 | 22.8 |
| Comparative Example 8 | --- | 0 | --- | --- | --- | 0 | --- | 230 | --- | 0.770 | 0.867 | 21.0 |

In each of the examples and the comparative examples, it was able to take a sample after the heat treatment out of the heat treatment tube (1) with ease, and no fusion of the particles of the sample was observed.

In Comparative Example 5, only the second-stage solid-phase polycondensation step at a high temperature is the solid-phase polycondensation step, so a solid-phase polycondensation reaction rate is small.

In each of Comparative Examples 6 and 7, a difference in solid-phase polycondensation temperature between the first-stage solid-phase polycondensation step and the second-stage solid-phase polycondensation step is lower than 15°C, so a solid-phase polycondensation reaction rate is small. In Comparative Example 8, only the second-stage solid-phase polycondensation step at a high temperature is performed, so a solid-phase polycondensation reaction rate is small.

(Example 13)

<Production of PET Prepolymer C>

PET Prepolymer C was produced with the PET prepolymer continuous production apparatus used in the production of PET Prepolymer A described above by: subjecting a dicarboxylic acid and a diol to an esterification reaction; additionally subjecting the resultant to a melt polycondensation reaction; taking the resultant PET prepolymer in a molten state in a strand shape out of a die plate; and cutting the prepolymer. A method for the production is specifically described below.

In the slurry preparation tank, slurry containing terephthalic acid and ethylene glycol at a molar ratio of 1 : 1.5 and containing tetra-n-butyl titanate in an amount in terms of a titanium atom of 4 massppm with respect to PET to be obtained was prepared. In addition, 400 parts by mass of bis-($\beta$-hydroxyethyl)terephthalate were loaded into the first esterification reaction tank, and were melted under a nitrogen atmosphere. The slurry prepared in the slurry preparation tank was continuously charged at a rate of 135 parts by mass/h into the reaction tank with its temperature and pressure kept at 262°C and 96 kPaG (hereinafter, the symbol "G" represents a pressure relative to the atmospheric pressure), respectively in order that an average residence time in terms of the polyester prepolymer might be 4.5 hours. An esterification reaction was performed while produced water was removed from the separation column by distillation. The reaction liquid was continuously transferred to the second esterification reaction tank.

In the second esterification reaction tank, an esterification reaction was performed under a temperature of 260°C and a pressure of 5 kPaG for a residence time of 1.5 hours. The resultant was continuously transferred to the perfect mixing type first melt polycondensation reaction tank through the transferring pipe.

In the first melt polycondensation reaction tank, a reaction was performed under a temperature of 270°C and a pressure of 4.0 kPaA (the symbol "A" represents an absolute pressure) for a residence time of 1.0 hour, and the resultant was continuously transferred to the second melt polycondensation reaction tank through the transferring pipe. In the second melt polycondensation reaction tank, a melt polycondensation reaction was performed under a temperature of 270°C and a pressure of 4.0 kPaA for a residence time of 1.0 hour, and the resultant was transferred to the third melt polycondensation reaction tank through the transferring pipe. In the third melt polycondensation reaction tank, a melt polycondensation reaction was performed under a temperature of 270°C and a pressure of 4.0 kPaA for a residence time of 1.2 hours.

The molten PET prepolymer thus obtained was introduced to a die head as it was through the gear pump and the extracting pipe, and was taken in a strand shape out of a die hole. After having been cooled with water, the prepolymer was granulated with a Pelletizer (P-USG 100) manufactured by Rieter Automatic GmbH. A strand cut method was adopted as a method for the granulation; specifically, particles of PET Prepolymer C were obtained by: conveying the strand-shaped PET prepolymer in a cutter direction together with water while bringing the prepolymer into contact with water to cool the prepolymer; taking up the prepolymer by sandwiching the prepolymer between a pair of take-up rolls placed in front of a cutter having fixed teeth and rotary teeth; supplying the prepolymer to the cutter; and cutting the prepolymer with the cutter.

Here, the molten PET prepolymer was ejected in an amount of 60 kg/h, and had a temperature of 270°C. The prepolymer was ejected in a strand shape from a die plate perforated with four 3-mmφ circular die holes in a downward direction at an angle of 45° relative to a horizontal direction as an ejection direction.

The strand-shaped PET prepolymer was landed on a water cooling zone of a strand cutter through an air cooling distance of 100 mm or more, conveyed while being cooled with water at 50°C, taken up with the take-up rolls, and supplied to the cutter. The strand was taken up at a rate of 3.00 m/sec, a ratio between the number of revolutions of each of the take-up rolls and the number of revolutions of each of the rotary teeth of the cutter was adjusted, and the strand was granulated in order that each particle might have a length in a take-up direction of 1.0 mm.

As a result, the particles of PET Prepolymer C each having an elliptic cylinder shape close to a shape obtained by attaching semicircular columns to both terminals of a substantial rectangular parallelepiped having a length of 1.0 mm, a width of 1.3 mm, and a thickness of 0.9 mm were obtained. The particles had an intrinsic viscosity of 0.290 dL/g, a terminal carboxyl group concentration of 22 equivalents/ton, and a diethylene glycol copolymerization amount of 2.0 mol%, and had an average mass of 1.5 mg/particle. Hereinafter, the particles of PET Prepolymer C are referred to as "Prepolymer C".

<Heat treatment>

<Crystallization step>

30 g of Prepolymer C described above were spread on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the prepolymer was subjected to a crystallization treatment at Tx = 180°C for 1 hour in a stream of nitrogen at a flow rate of 50 NL/min and a temperature of 180°C in the inert oven. Here, the symbol "NL" represents a volume (L) at 0°C and 1 atmospheric pressure. The sample after the crystallization treatment had an intrinsic viscosity of 0.290 dL/g and a crystallinity of 53 mass%.

<Heat treatment apparatus>

The above sample obtained by subjecting Prepolymer C to the crystallization treatment was treated with heat in the heat treatment apparatus made of glass shown in Fig. 9. The heat treatment apparatus is as described above.

<First-stage solid-phase polycondensation step>

30 g of Prepolymer C after the crystallization treatment described above were loaded into the heat treatment tube (1) from the opening portion of the branch (10), and air in the tube was replaced with nitrogen circulating in the tube. After that, the flow rate of nitrogen in the heat treatment tube (1) was set with the gas flow meter (2) in order that the superficial linear velocity of nitrogen (the term "superficial linear velocity" as used herein refers to the superficial linear velocity of a sample layer (the same holds true for the following description)) might be 0.30 m/sec at 210°C. Then, the heat treatment apparatus was immersed in the first oil bath (5) containing oil with its temperature adjusted to 212°C. The time point is defined as the starting point of a first-stage solid-phase polycondensation step (T1 = 210°C). 2 hours after that, about 0.3 g of the sample for intrinsic viscosity measurement was collected from the opening portion of the branch (10).

<Temperature increase step>

After the collection of the sample, the flow rate of nitrogen was changed in order that the superficial linear velocity of nitrogen might be 1.0 m/sec at 235°C, and the heat treatment apparatus was transferred to the second oil bath (5) containing oil with its temperature adjusted to 237°C. The time point is defined as the starting point of a temperature increase step (T2 = 235°C). Since it took 10 minutes for the temperature of the sample to reach 235°C, a temperature increase from T1 to (T1 + 15°C) was performed within 10 minutes. 10 minutes after the initiation of the temperature increase step, the sample for intrinsic viscosity measurement was collected from the opening portion of the branch (10).

<Second-stage solid-phase polycondensation step>

After the collection of the sample, the flow rate of nitrogen was changed in order that the superficial linear velocity of nitrogen might be 0.30 m/sec at 230°C, and the heat treatment apparatus was transferred to the third oil bath (5) containing oil with its temperature adjusted to 232 °C. The time point was defined as the starting point of a second-stage solid-phase polycondensation step (T3 = 230°C). The sample for intrinsic viscosity measurement was collected at a time point of each of 8 hours, 16 hours, and 32 hours after the starting point of the second-stage solid-phase polycondensation step as required.
The intrinsic viscosity of the sample for measurement collected after each of the first-stage solid-phase poly-condensation step, the temperature increase step, and the second-stage solid-phase polycondensation step was measured. Table 5[V-A] shows conditions for the heat treatment and the results of the measurement. In the table, a time to reach the intrinsic viscosity IV = 0.80 dL/g was determined by: connecting data around IV = 0.80 with a straight line in orthogonal coordinates; determining a heat treatment time at IV = 0.80 by interpolation; defining the time as a second-stage solid-phase polycondensation step time; and adding a first-stage solid-phase polycondensation time and a temperature increase step time to the second-stage solid-phase polycondensation step time. A crystallization step time was not included.

(Comparative Example 9)

The same process as that of Example 13 was performed except that no temperature increase step was performed in Example 13. Table 5[V-A] shows the results.

In the case of this example, the temperature increase step at 235°C was not performed, so the time to reach IV = 0.80 dL/g was longer than that in the case of Example 13.

(Example 14)

A prepolymer was produced in the same manner as in <Production of PET Prepolymer C> of Example 13 except that the ejection amount of the molten PET prepolymer in <Production of PET Prepolymer C> of Example 13 was changed to 100 kg/h.

As a result, PET Prepolymer Particles C' each having an elliptic cylinder shape close to a shape obtained by attaching semicircular columns to both terminals of a substantial rectangular parallelepiped having a length of 1.0 mm, a width of 1.6 mm, and a thickness of 1.2 mm were obtained. Particles C' had an intrinsic viscosity of 0.290 dL/g, a terminal carboxyl group concentration of 22 equivalents/ton, and a diethylene glycol copolymerization amount of 2.0 mol%, and had an average mass of 2.3 mg/particle.

The same treatment as that of <Heat treatment> of Example 13 was performed except that PET Prepolymer Particles C' were used. Table 5[V-A] shows the results.

(Comparative Example 10)

The same process as that of Example 14 was performed except that no temperature increase step was performed in Example 14. Table 5[V-A] shows the results.

In the case of this example, the temperature increase step at 235°C was not performed, so the time to reach IV = 0.80 dL/g was longer than that in the case of Example 14. It should be noted that the time to reach IV = 0.80 dL/g was estimated by: drawing a straight line connecting the results of the measurement of the intrinsic viscosity at 16 hours and 32 hours after the starting point of the second-stage solid-phase polycondensation step; and extrapolating the line to IV = 0.80.

(Comparative Example 11)

The same process as that of Example 13 was performed except that the temperature for the temperature increase step in Example 13 was changed to 220°C. Table 5[V-A] shows the results.

In the case of this example, a temperature difference between the first-stage solid-phase polycondensation step and the temperature increase step was as small as 10°C and hence did not satisfy (Eq. 1), so the time to reach IV = 0.80 dL/g was longer than that in the case of Example 13.

(Comparative Example 12)

The same process as that of Example 13 was performed except that a rate of temperature increase and a time for temperature increase in the temperature increase step in Example 13 were set to 0. 42 °C/min and 60 minutes, respectively. Table 5[V-A] shows the results.

In the case of this example, a time to reach 235°C exceeded 30 minutes, so the time to reach IV = 0.80 dL/g was longer than that in the case of Example 13.

(Example 15)

<Production of PET Prepolymer D>

PET prepolymer particles were obtained in the same manner as in Example 13 except the following points: in <Production of PET Prepolymer C> of Example 13, the slurry to be prepared in the slurry preparation tank was changed to slurry containing terephthalic acid, isophthalic acid, and ethylene glycol at a molar ratio of 0.97 : 0.03 : 1.5 and containing tetra-n-butyl titanate in an amount in terms of a titanium atom of 8 massppm with respect to PET to be obtained, the pressure in the first melt polycondensation reaction tank was changed to 3.8 kPaA, the temperature and the pressure in each of the second and third melt polycondensation reaction tanks were changed to 275°C and 3.8 kPaA, respectively, the die plate was changed to one having ten die holes, and the ejection amount of a molten polyester was changed to 78 kg/h. As a result, the particles of PET Prepolymer D each having an elliptic cylinder shape close to a shape obtained by attaching semicircular columns to both terminals of a substantial rectangular parallelepiped having a length of 1.0 mm, a width of 1.0 mm, and a thickness of 0.7 mm were obtained. The particles had an intrinsic viscosity of 0.323 dL/g, a terminal carboxyl group concentration of 26 equivalents/ton, and an isophthalic acid copolymerization amount and a diethylene glycol copolymerization amount of 2.9 mol% and 2.2 mol%, respectively, and had an average mass of 1.4 mg/particle. Hereinafter, the particles of PET Prepolymer D are referred to as "Prepolymer D".

<Heat treatment>

A <heat treatment> was performed in the same manner as in Example 13 except that: the sample was changed to Prepolymer D described above; conditions for the first-stage solid-phase polycondensation step, the temperature increase step, and the second-stage solid-phase polycondensation step were changed as shown in Table 5 [V-B] ; and the time points at which the sample for intrinsic viscosity measurement was collected in the second-stage solid-phase polycondensation step were changed to the time points of 16 hours and 32 hours after the starting point of the step.
The sample after the crystallization treatment had an intrinsic viscosity of 0. 331 dL/g. Table 5 [V-B] shows conditions for the heat treatment and the results of the measurement.

(Comparative Example 13)

The same process as that of Example 15 was performed except that no temperature increase step was performed in Example 15. Table 5[V-B] shows the results.
In the case of this example, the temperature increase step at 225°C was not performed, so the time to reach IV = 0.80 dL/g was longer than that in the case of Example 15.

(Example 16)

A <heat treatment> was performed in the same manner as in Example 15 except that: conditions for the first- and second-stage solid-phase polycondensation steps in Example 15 were changed as shown in Table 5[V-C]; and the time point at which the sample for intrinsic viscosity measurement was collected in the second-stage solid-phase polycondensation step in Example 15 was changed to the time point of 24 hours after the starting point of the step. Table 5 [V-C] shows the results.
In the table, a time to reach the intrinsic viscosity IV = 0.70 dL/g was determined by: connecting data at 24 hours and data immediately before the data with a straight line in orthogonal coordinates; determining a heat treatment time at IV = 0.70 by interpolation; defining the time as a second-stage solid-phase polycondensation step time; and adding a first-stage solid-phase polycondensation time and a temperature increase step time to the second-stage solid-phase polycondensation step time. A crystallization step time was not included.

(Comparative Example 14)

The same process as that of Example 16 was performed except that no temperature increase step was performed in Example 16. Table 5[V-C] shows the results.
In the case of this example, the temperature increase step at 235°C was not performed, so the time to reach IV = 0.70 dL/g was longer than that in the case of Example 16.

(Example 17)

The same process as that of Example 16 was performed except that conditions for the first-stage solid-phase polycondensation step in Example 16 were changed as shown in Table 5[V-C]. Table 5[V-C] shows the results.

(Comparative Example 15)

The same process as that of Example 17 was performed except that no temperature increase step was performed in Example 17. Table 5[V-C] shows the results.
In the case of this example, the temperature increase step at 235°C was not performed, so the time to reach IV = 0.70 dL/g was longer than that in the case of Example 17.

[Table 5]

[V-A]

| | Mass of prepolymer particles | First-stage solid-phase polycondensation step | | | Temperature increase step | | | Second-stage solid-phase polycondensation step | | | | Time to reach IV = 0.80 |
|---|---|---|---|---|---|---|---|---|---|---|---|---|
| | | T1 °C | Reaction time | IV dL/g | T2 °C | Time for temperature increase | IV dL/g | T3 °C | After 8 hours IV dL/g | After 16 hours IV dL/g | After 32 hours IV dL/g | |
| | mg/particle | | hours | | | minutes | | | | | | hours |
| Example 13 | 1.5 | 210 | 2 | 0.380 | 235 | 10 | 0.392 | 230 | 0.708 | 0.817 | 0.942 | 16.9 |
| Comparative Example 9 | 1.5 | 210 | 2 | 0.380 | --- | --- | --- | 230 | 0.600 | 0.694 | 0.816 | 31.9 |
| Example 14 | 2.3 | 210 | 2 | 0.352 | 235 | 10 | 0.360 | 230 | 0.657 | 0.765 | 0.879 | 20.8 |
| Comparative Example 10 | 2.3 | 210 | 2 | 0.352 | --- | --- | --- | 230 | 0.557 | 0.637 | 0.762 | 38.9 |
| Comparative Example 11 | 1.5 | 210 | 2 | 0.380 | 220 | 10 | 0.384 | 230 | 0.610 | 0.701 | 0.822 | 26.9 |
| Comparative Example 12 | 1.5 | 210 | 2 | 0.380 | 235 | 60 | 0.419 | 230 | 0.652 | 0.737 | 0.850 | 24.1 |

[V-B]

| | Mass of prepolymer particles mg/particle | First-stage solid-phase polycondensation step | | | Temperature increase step | | | Second-stage solid-phase polycondensation step | | | Time to reach IV = 0.80 |
|---|---|---|---|---|---|---|---|---|---|---|---|
| | | T1 °C | Reaction time hours | IV dL/g | T2 °C | Time for temperature increase minutes | IV dL/g | T3 °C | After 16 hours IV dL/g | After 32 hours IV dL/g | hours |
| Example 15 | 1.4 | 200 | 4 | 0.390 | 225 | 10 | 0.403 | 220 | 0.781 | 0.904 | 22.6 |
| Comparative Example 13 | 1.4 | 200 | 4 | 0.390 | --- | --- | --- | 220 | 0.696 | 0.806 | 35.1 |

EP 2 202 259 B1

[V-C]

| | Mass of prepolymer particles mg/particle | First-stage solid-phase polycondensation step | | | Temperature increase step | | | Second-stage solid-phase polycondensation step | | Time to reach IV = 0.70 |
|---|---|---|---|---|---|---|---|---|---|---|
| | | T1 °C | Reaction time hours | IV dL/g | T2 °C | Time for temperature increase minutes | IV dL/g | T3 °C | After 24 hours IV dL/g | hours |
| Example 16 | 1.4 | 210 | 2 | 0.399 | 235 | 10 | 0.423 | 215 | 0.850 | 17.7 |
| Comparative Example 14 | 1.4 | 210 | 2 | 0.399 | --- | --- | --- | 215 | 0.702 | 25.8 |
| Example 17 | 1.4 | 220 | 2 | 0.453 | 235 | 10 | 0.472 | 215 | 0.774 | 20.3 |
| Comparative Example 15 | 1.4 | 220 | 2 | 0.453 | --- | --- | --- | 215 | 0.746 | 22.2 |

(Example 18)

<Fusion test>

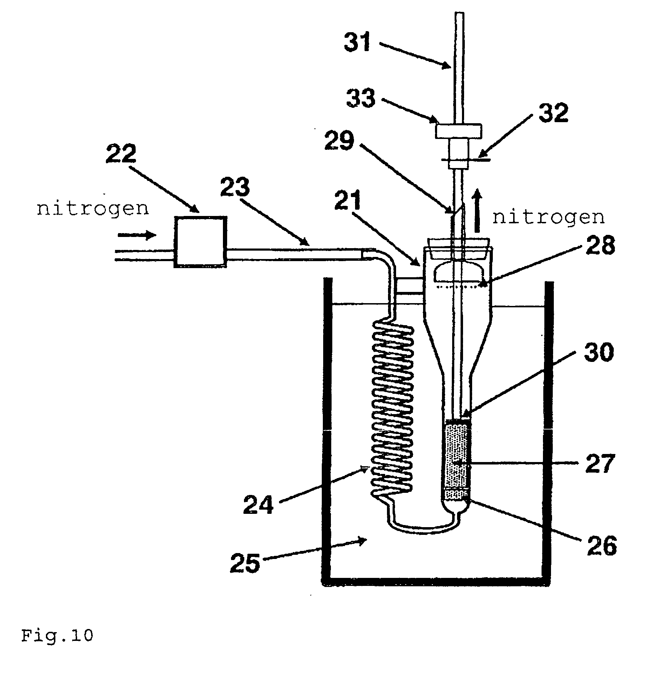

To investigate the fusion properties of PET particles after a heat treatment, PET particles after the performance of the temperature increase step of Example 13 (hereinafter, referred to as "Particles C after Temperature Increase Step") were subjected to a fusion test with a fusion test apparatus shown in Fig. 10 in a state where a load was applied to the particles.
Hereinafter, the fusion test apparatus will be described.
In the fusion test apparatus shown in Fig. 10, a sample is loaded into a heat treatment tube (21) made of glass and having a sample loading portion with an inner diameter of 14 mm. Nitrogen heated by oil charged into an oil bath (25) is introduced into the heat treatment tube (21) via a gas flow meter (22), a nitrogen-introducing tube(23),and a nitrogen-preheating tube(24). Introduced nitrogen is dispersed by a dispersion plate (26) at a lower portion of the heat treatment tube (21), and is turned into an upward flow having a substantially uniform linear velocity in the heat treatment tube (21) to pass through a sample layer (27). Nitrogen that has passed through the sample layer (27) is exhausted from a gas purge port (29) to the outside of the heat treatment tube (21) via a filter (28) at an upper portion of the heat treatment tube (21). Here, it was confirmed that the temperature of the sample in the heat treatment tube (21) was equal to the temperature of the oil in the oil bath by previously loading another sample in the tube and measuring the temperature of the other sample with a temperature gauge provided with a thermocouple. In addition, a stainless hollow supporting column (31) can be mounted on the sample layer (27) through a stainless metal gauze (30). In addition, a seat (33) on which a cone is to be mounted by using a pin (32) can be fixed to the supporting column (31) (the mass of the supporting column (31) is 80 g, and the total mass of the pin (32) and the seat (33) is 42 g).
8 g of Particles C after Temperature Increase Step as a sample were loaded into the heat treatment tube (21), and the metal gauze (30) and the supporting column (31) were mounted on the tube. After that, air in the tube was replaced with nitrogen circulating in the tube. After that, the flow rate of nitrogen in the heat treatment tube (21) was set with the gas flow meter (22) in order that the superficial linear velocity of nitrogen (the term "superficial linear velocity" as used herein refers to a superficial linear velocity at the sample layer portion (the same holds true for the following description)) might be 0.40 m/sec at 230°C. Then, the fusion test apparatus was immersed in the oil bath (25) adjusted to 235°C. The temperature of the sample layer was set to 235°C by keeping the immersion for 10 minutes. After that, the temperature of the oil charged into the oil bath (25) was reduced to 230°C over 10 minutes. The time point is defined as the starting point of a fusion test at 230°C. A load to be applied to the sample layer (27) was only a load corresponding to the mass of the supporting column (30) (80 g-weight) for a time period of 1 hour from the starting point. 1 hour after the starting point, the pin (32) and the seat (33) were attached to the supporting column (30) so that the load to be applied to the sample might be 122 g-weight. 1.5 hours after the starting point, a cone was mounted on the seat (33) so that the load might be 160 g-weight. After that, the load was increased to 196 g-weight, 231 g-weight, 265 g-weight, 298 g-weight, and 330 g-weight every 0.5 hour, and was 1,039 g-weight for a time period commencing on a time point of 4.5 hours after the starting point and ending on a time point of 5 hours after the starting point. 5 hours after the starting point, the fusion test apparatus was lifted from the oil bath, and was left standing to cool for 10 minutes. After that, the circulation of nitrogen was stopped, and the cone (including the supporting column, the pin, and the seat) was removed. The sample was extracted on a sieve having an aperture of 2.0 mm, and was silently classified, whereby a fusion ratio (mass ratio of the sample on the sieve) was measured.
The fusion ratio was 0.4 mass%. The result showed that the sample was excellent in fusion resistance at 230°C under a load.

(Example 19)

<Fusion test>

The same process as that of Example 18 was performed except the following points: in Example 18, the sample was changed to PET particles after the performance of the temperature increase step of Example 16, the flow rate of nitrogen was set with the flow meter (22) in order that the superficial linear velocity might be 0.40 m/sec at 215°C, the temperature to which the oil bath (25) adjusted to 235°C was reduced over 10 minutes was changed to 215°C, and the time point was defined as the starting point of a fusion resistance test at 215°C.
The fusion ratio was 11 mass%.

(Example 20)

Steps up to the temperature increase step were performed in the same manner as in Example 16 except that a time for the first-stage solid-phase polycondensation step was changed to 4 hours. The resultant PET particles had an intrinsic viscosity of 0.476 dL/g.

<Fusion test>

The same process as that of Example 19 was performed except that the sample in Example 19 was changed to the above PET particles having an intrinsic viscosity of 0.476 dL/g.

The fusion ratio was 0.3 mass%. The result showed that the sample was more excellent in fusion resistance than the sample used in Example 19.

(Example 21)

Prepolymer D described in Example 15 was subjected to such a heat treatment test that the heat treatment of the prepolymer in a solid state was continuously performed. That is, Prepolymer D was continuously supplied to a perfect mixing type fluidized bed. The prepolymer was subjected to a first-stage crystallization treatment (crystallization step) under an air atmosphere having a superficial linear velocity of 3.2 m/sec and a temperature of 120°C for an average residence time of 60minutes, and was continuously discharged. The resultant sample was continuously supplied to a fluidized bed having plug flow property via a transferring pipe. The sample was subjected to a second-stage crystallization treatment (crystallization step) under a nitrogen atmosphere having a superficial linear velocity of 1. 3 m/sec and a temperature of 180°C for an average residence time of 15 minutes, and was continuously discharged. The resultant sample was continuously supplied to a moving bed via a transferring pipe. The sample was subjected to a first-stage solid-phase polycondensation treatment (first-stage solid-phase polycondensation step) under a nitrogen atmosphere having a temperature of 210°C for an average residence time of 120 minutes, and was continuously discharged. The resultant sample was left standing to cool under a nitrogen atmosphere once. The sample after the cooling had an intrinsic viscosity of 0.347 dL/g.

The sample which had been left standing to cool once was continuously supplied to a perfect mixing type fluidized bed. The temperature of the sample was increased again under an air atmosphere having a superficial linear velocity of 3.2 m/sec and a temperature of 180°C for an average residence time of 10 minutes, and the sample was continuously discharged. The resultant sample was continuously supplied to a fluidized bed having plug flow property via a transferring pipe. The sample was subjected to a temperature increase treatment (temperature increase step) under a nitrogen atmosphere having a superficial linear velocity of 1.6 m/sec and a temperature of 240°C for an average residence time of 15 minutes, and was continuously discharged. The sample immediately in front of the outlet of the temperature increase step had a temperature of 232°C. The resultant sample was continuously supplied to a moving bed via a transferring pipe. The sample was subjected to a second-stage solid-phase polycondensation treatment under a nitrogen atmosphere having a temperature of 215°C for an average residence time of 14 hours, and was continuously discharged.

The resultant sample was left standing to cool under a nitrogen atmosphere. The sample after the cooling had an intrinsic viscosity of 0.737 dL/g.

(Example 22)

In Example 21, the sample was collected at the outlet of the temperature increase step. The sample had an intrinsic viscosity of 0.386 dL/g. 30 g of the sample were loaded into the heat treatment tube (1) of the heat treatment apparatus shown in Fig. 9 from the opening portion of the branch (10), and air in the tube was replaced with nitrogen circulating in the tube. After that, the flow rate of nitrogen in the heat treatment tube (1) was set with the gas flow meter (2) in order that the superficial linear velocity of nitrogen might be 0.30 m/sec at 210°C. Then, the heat treatment apparatus was immersed in the first oil bath (5) adjusted to 212°C. The time point is defined as the starting point of second-stage solid-phase polycondensation at 210°C. The sample for intrinsic viscosity measurement was collected from the opening portion of the branch (10) at a time point of each of 32 hours and 64 hours after the starting point of the second-stage solid-phase polycondensation.

The intrinsic viscosities of the sample were 0.741 dL/g and 0.853 dL/g, respectively. In addition, time periods for the intrinsic viscosities to reach 0.70 dL/g and 0.80 dL/g was 30.6 hours and 51.1 hours, respectively.

It should be noted that, in this example, the first-stage solid-phase polycondensation step and the temperature increase step were performed in a continuous moving bed at 210°C and a continuous moving bed at 232°C, respectively, and the second-stage solid-phase polycondensation step was performed in a batch fixed bed at 210°C.

(Comparative Example 16)

In Example 21, after the first-stage solid-phase polycondensation treatment, the sample was left standing to cool under a nitrogen atmosphere before being collected. The sample had an intrinsic viscosity of 0. 347 dL/g. A heat treatment was performed in the same manner as in Example 22 except that the aforementioned sample was used, and the sample for intrinsic viscosity measurement was collected.

The intrinsic viscosities of the sample were 0.681 dL/g and 0.777 dL/g, respectively. In addition, time periods for the intrinsic viscosities to reach 0.70 dL/g and 0.80 dL/g was 40.3 hours and 73.7 hours, respectively.

In this comparative examples, no temperature increase step was performed, with the result that a solid-phase polycondensation reaction rate was smaller than that in Example 22.

It should be noted that, in this example, the first-stage solid-phase polycondensation step was performed in a continuous moving bed at 210°C, no temperature increase step was performed, and the second-stage sol id-phase polycondensation step was performed in a batch fixed bed at 210°C.

The present application has been made to claim priority based on each of Japanese Patent Application No. 2005-273293 filed on the twenty-first day of September, 2005, Japanese Patent Application No. 2005-253286 filed on the first day of September, 2005, Japanese Patent Application No. 2005-259383 filed on the seventh day of September, 2005, and Japanese Patent Application No. 2006-129284 filed on the eighth day of May, 2006.

**Claims**

1. A method of producing a polyethylene terephthalate, comprising performing a heat treatment of a polyethylene terephthalate prepolymer having an intrinsic viscosity of 0.18 dL/g or more and 0.40 dL/g or less in a solid state to provide an intrinsic viscosity of 0.70 dL/g or more,
   wherein the intrinsic viscosity is determined by the following formula:

$$IV = [(1+4K_H \cdot \eta_{sp})^{0.5}-1] / (200K_H \cdot C)$$

where $\eta_{sp} = \eta/\eta_0 - 1$, $\eta$ represents the falling time (second) of the sample solution in a capillary at 30°C, $\eta_0$ represents the falling time (second) of the solvent in a capillary at 30°C, where the solvent is a mixed solvent containing phenol and 1,1,2,2-tetrachloroethane at a mass ratio of 1 : 1, an adopted value for C is 1.00 x $10^{-2}$ (kg/L), and an adopted value for $K_H$ is 0.33,
   wherein the heat treatment in the solid state comprises a first-stage solid-phase polycondensation step, a temperature increase step, and a second-stage solid-phase polycondensation step in the stated order, and the respective steps satisfy the following conditions (1) to (3):

   (1) the first-stage solid-phase polycondensation step is a step of treating the polyethylene terephthalate prepolymer with heat under an inert gas atmosphere or reduced pressure, and a temperature (T1c) of the heat treatment is 190°C or higher and 225°C or lower;
   (2) the temperature increase step is a step of increasing a temperature of the polyethylene terephthalate prepolymer after the first-stage solid-phase polycondensation step under an inert gas atmosphere or reduced pressure from a temperature equal to or lower than the temperature (T1c) of the heat treatment of the first-stage solid-phase polycondensation step to a temperature (T2c), the temperature of the polyethylene terephthalate prepolymer is increased from the temperature T1c (°C) to T2c (°C) within 30 minutes, and the temperatures T1c (°C) and T2c (°C) satisfy the following (Eq. 1c) and (Eq. 2c):

$$T1c+15 \leq T2c \quad (Eq.\ 1c),$$

   and

$$205°C \leq T2c \leq 240°C \quad (Eq.\ 2c);$$

   and
   (3) the second-stage solid-phase polycondensation step is a step of treating the polyethylene terephthalate prepolymer after the first-stage solid-phase polycondensation step and the temperature increase step with heat under an inert gas atmosphere or reduced pressure, and a temperature (T3c) of the heat treatment is 190°C or higher and 240°C or lower.

2. A method of producing a polyethylene terephthalate according to claim 1, wherein the heat treatment further includes a crystallization step prior to the first-stage solid-phase polycondensation step, and the crystallization step comprises a step of treating the polyethylene terephthalate prepolymer with heat at a temperature (Tx) of 110°C or higher and 200°C or lower.

3. A method of producing a polyethylene terephthalate according to claim 1 or 2, wherein the polyethylene terephthalate prepolymer to be subjected to the second-stage solid-phase polycondensation step has an intrinsic viscosity of 0.35 dL/g or more.

4. A method of producing a polyethylene terephthalate according to any one of claims 1 to 3, wherein the heat treatment in the solid state is continuously performed.

5. A method of producing a polyethylene terephthalate according to any one of claims 1 to 4, wherein the first-stage solid-phase polycondensation step and/or the second-stage solid-phase polycondensation step is performed in a continuous moving bed.

6. A method of producing a polyethylene terephthalate according to any one of claims 1 to 5, wherein the crystallization step is performed in a fluidized bed.

7. A method of producing a polyethylene terephthalate according to any one of claims 1 to 6, wherein the temperature increase step is performed in a fluidized bed.

8. A method of producing a polyethylene terephthalate according to any one of claims 1 to 7, wherein the polyethylene terephthalate prepolymer is comprised of particles having an average mass of 0.1 mg/particle or more and 30 mg/particle or less.

9. A method of producing a polyethylene terephthalate according to any one of claims 1 to 8, wherein the polyethylene terephthalate prepolymer has a terminal carboxyl group concentration of 100 equivalents/ton or less.

10. A method of producing a polyethylene terephthalate according to any one of claims 1 to 9, wherein the polyethylene terephthalate comprises a titanium compound.


**Patentansprüche**

1. Verfahren zur Herstellung eines Polyethylenterephthalats, umfassend die Durchführung einer Wärmebehandlung eines Polyethylenterephthalatpräpolymers mit einer intrinsischen Viskosität von 0,18 dL/g oder mehr und 0,40 dL/g oder weniger im Festzustand, um eine intrinsische Viskosität von 0,70 dL/g oder mehr bereitzustellen, wobei die intrinsische Viskosität durch die folgende Formel ermittelt wird:

$$IV \; [(1+4K_H \cdot \eta_{sp})^{0,5}-1 \; / \; (200K_H \cdot C)$$

wobei $\eta_{sp} = \eta/\eta_0 - 1$ ist, $\eta$ die Abfallzeit (Sekunde) der Probenlösung in einer Kapillare bei 30°C darstellt, $\eta_0$ die Fallzeit (Sekunde) des Lösungsmittels in einer Kapillare bei 30°C darstellt, wobei das Lösungsmittel ein Lösungsmittelgemisch ist, welches Phenol und 1,1,2,2-Tetrachlorethan in einem Massenverhältnis von 1:1 enthält, für C 1,00 x $10^{-2}$ (kg/L) angenommen wird, und für $K_H$ 0,33 angenommen wird, wobei die Wärmebehandlung im Festzustand einen ersten Festkörper-Polykondensationsschritt, einen Schritt der Temperaturerhöhung und einen zweiten Festkörper-Polykondensationsschritt in der angegebenen Reihenfolge umfasst, und die entsprechenden Schritte die folgenden Bedingungen (1) bis (3) erfüllen:

(1) der erste Festkörper-Polykondensationsschritt stellt einen Schritt zur Behandlung des Polyethylenterephthalatpräpolymers mit Wärme unter Inertgasatmosphäre oder reduziertem Druck dar und eine Temperatur (T1c) der Wärmebehandlung beträgt 190°C oder höher und 225°C oder niedriger;

(2) der Temperaturerhöhungsschritt ist ein Schritt zur Erhöhung der Temperatur des Polyethylenterephthalatpräpolymers nach dem ersten Festkörper-Polykondensationsschritt unter Inertgasatmosphäre oder reduziertem Druck von einer Temperatur gleich oder niedriger als die Temperatur (T1c) der Wärmebehandlung des ersten Festkörper-Polykondensationsschrittes zur Temperatur (T2c), die Temperatur des Polyethylenterephthalatpräpolymers wird von der Temperatur T1c (°C) zu T2c (°C) innerhalb von 30 Minuten erhöht und die Temperaturen T1c (°C) und T2c (°C) erfüllen die folgenden (G1. 1c) und (G1. 2c):

$$T1c + 15 \leq T2c \quad (Gl.\ 1c)$$

und

$$205°C \leq T2c \leq 240°C \quad (Gl.\ 2c);$$

und

(3) der zweite Festkörper-Polykondensationsschritt stellt einen Schritt zur Behandlung des Polyethylenterephthalatpräpolymers nach dem ersten Festkörper-Polykondensationsschritt und dem Temperaturerhöhungsschritt mit Wärme unter Inertgasatmosphäre oder reduziertem Druck dar und eine Temperatur (T3c) der Wärmebehandlung ist 190°C oder höher und 240°C oder niedriger.

2. Verfahren zur Herstellung eines Polyethylenterephthalats gemäß Anspruch 1, wobei die Wärmebehandlung weiter einen Kristallisationsschritt vor dem ersten Festkörper-Polykondensationsschritt einschließt und der Kristallisationsschritt einen Schritt zur Behandlung des Polyethylenterephthalatpolymers mit Wärme bei einer Temperatur (Tx) von 110°C oder höher und 200°C oder niedriger umfasst.

3. Verfahren zur Herstellung eines Polyethylenterephthalats gemäß Anspruch 1 oder 2, wobei das Polyethylenterephthalatpräpolymer, welches dem zweiten Festkörper-Polykondensationsschritt unterworfen wird, eine intrinsische Viskosität von 0,35 dL/g oder mehr besitzt.

4. Verfahren zur Herstellung eines Polyethylenterephthalats gemäß einem der Ansprüche 1 bis 3, wobei die Wärmebehandlung im Festzustand kontinuierlich durchgeführt wird.

5. Verfahren zur Herstellung eines Polyethylenterephthalats gemäß einem der Ansprüche 1 bis 4, wobei der erste Festkörper-Polykondensationsschritt und/oder der zweite Festkörper-Polykondensationsschritt in einem kontinuierlichen Wanderbett durchgeführt wird.

6. Verfahren zur Herstellung eines Polyethylenterephthalats gemäß einem der Ansprüche 1 bis 5, wobei der Kristallisationsschritt in einer Wirbelschicht durchgeführt wird.

7. Verfahren zur Herstellung eines Polyethylenterephthalats gemäß einem der Ansprüche 1 bis 6, wobei der Temperaturerhöhungsschritt in einer Wirbelschicht durchgeführt wird.

8. Verfahren zur Herstellung eines Polyethylenterephthalats gemäß einem der Ansprüche 1 bis 7, wobei das Polyethylenterephthalatpräpolymer Partikel mit einer durchschnittlichen Masse von 0,1 mg/Partikel oder mehr und 30 mg/Partikel oder weniger umfasst.

9. Verfahren zur Herstellung eines Polyethylenterephthalats gemäß einem der Ansprüche 1 bis 8, wobei das Polyethylenterephthalatpräpolymer eine terminale Carboxylgruppenkonzentration von 100 Äquivalente/Tonne oder weniger besitzt.

10. Verfahren zur Herstellung eines Polyethylenterephthalats gemäß einem der Ansprüche 1 bis 9, wobei das Polyethylenterephthalat eine Titanverbindung umfasst.

**Revendications**

1. Procédé de production d'un polytéréphtalate d'éthylène, comprenant l'exécution d'un traitement thermique d'un prépolymère de polytéréphtalate d'éthylène ayant une viscosité intrinsèque de 0,18 dl/g ou plus et de 0,40 dl/g ou moins dans un état solide pour donner une viscosité intrinsèque de 0,70 dl/g ou plus,
dans lequel la viscosité intrinsèque est déterminée par la formule suivante :

$$IV = [(1+4K_H \cdot \eta_{sp})^{0,5}-1] / (200K_H \cdot C)$$

où $\eta_{sp} = \eta/\eta_0 - 1$, $\eta$ représente le temps de descente (seconde) de la solution d'échantillon dans un capillaire à 30 °C, $\eta_0$ représente le temps de descente (seconde) du solvant dans un capillaire à 30 °C, où le solvant est un solvant mélangé contenant du phénol et du 1,1,2,2-tétrachloroéthane à un rapport en masse de 1 : 1, une valeur adoptée pour C est 1,00 × 10$^{-2}$ (kg/l) et une valeur adoptée pour $K_H$ est 0,33,
dans lequel le traitement thermique à l'état solide comprend une étape de polycondensation en phase solide de premier étage, une étape d'augmentation de température et une étape de polycondensation en phase solide de second étage dans l'ordre mentionné, et les étapes respectives satisfont aux conditions suivantes (1) à (3) :

(1) l'étape de polycondensation en phase solide de premier étage est une étape de traitement du prépolymère de polytéréphtalate d'éthylène à de la chaleur sous une atmosphère de gaz inerte ou une pression réduite, et une température (T1c) du traitement thermique est 190 °C ou plus et 225 °C ou moins ;
(2) l'étape d'augmentation de température est une étape d'augmentation d'une température du prépolymère de polytéréphtalate d'éthylène après l'étape de polycondensation en phase solide de premier étage sous une atmosphère de gaz inerte ou une pression réduite à partir d'une température égale ou inférieure à la température (T1c) du traitement thermique de l'étape de polycondensation en phase solide de premier étage jusqu'à une température (T2c), la température du prépolymère de polytéréphtalate d'éthylène est augmentée de la température T1c (°C) à T2c (°C) en 30 minutes, et les températures T1c (°C) et T2c (°C) satisfont aux équations suivantes (Eq. 1c) et (Eq. 2c) :

$$T1c + 15 \leq T2c \qquad (Eq. \ 1c),$$

et

$$205 \ °C \leq T2c \leq 240 \ °C \qquad (Eq. \ 2c) \ ;$$

et
(3) l'étape de polycondensation en phase solide de second étage est une étape de traitement du prépolymère de polytéréphtalate d'éthylène après l'étape de polycondensation en phase solide de premier étage et l'étape d'augmentation de température à la chaleur sous une atmosphère de gaz inerte ou une pression réduite, et une température (T3c) du traitement thermique est 190 °C ou plus et 240 °C ou moins.

2. Procédé de production d'un polytéréphtalate d'éthylène selon la revendication 1, dans lequel le traitement thermique inclut en outre une étape de cristallisation avant l'étape de polycondensation en phase solide de premier étage, et l'étape de cristallisation comprend une étape de traitement du prépolymère de polytéréphtalate d'éthylène à de la chaleur à une température (Tx) de 110 °C ou plus et 200 °C ou moins.

3. Procédé de production d'un polytéréphtalate d'éthylène selon la revendication 1 ou 2, dans lequel le prépolymère de polytéréphtalate d'éthylène devant être soumis à l'étape de polycondensation en phase solide de second étage a une viscosité intrinsèque de 0,35 dl/g ou plus.

4. Procédé de production d'un polytéréphtalate d'éthylène selon l'une quelconque des revendications 1 à 3, dans lequel le traitement thermique à l'état solide est effectué de façon continue.

5. Procédé de production d'un polytéréphtalate d'éthylène selon l'une quelconque des revendications 1 à 4, dans lequel l'étape de polycondensation en phase solide de premier étage et/ou l'étape de polycondensation en phase solide de second étage sont effectuées dans un lit à déplacement continu.

6. Procédé de production d'un polytéréphtalate d'éthylène selon l'une quelconque des revendications 1 à 5, dans lequel l'étape de cristallisation est effectuée dans un lit fluidifié.

7. Procédé de production d'un polytéréphtalate d'éthylène selon l'une quelconque des revendications 1 à 6, dans lequel l'étape d'augmentation de température est effectuée dans un lit fluidifié.

8. Procédé de production d'un polytéréphtalate d'éthylène selon l'une quelconque des revendications 1 à 7, dans lequel le prépolymère de polytéréphtalate d'éthylène est composé de particules ayant une masse moyenne de 0,1 mg/particule ou plus et de 30 mg/particule ou moins.

9. Procédé de production d'un polytéréphtalate d'éthylène selon l'une quelconque des revendications 1 à 8, dans lequel le prépolymère de polytéréphtalate d'éthylène a une concentration de groupe carboxyle terminale de 100 équivalents/tonne ou moins.

10. Procédé de production d'un polytéréphtalate d'éthylène selon l'une quelconque des revendications 1 à 9, dans lequel le polytéréphtalate d'éthylène comprend un composé de titane.

Fig.1

Fig.2

(1)                   (2)

Fig.3

Fig.4

Fig.5

Fig.6

Fig.7

Fig.8

Fig.9

Fig.10

**EP 2 202 259 B1**

## REFERENCES CITED IN THE DESCRIPTION

### Patent documents cited in the description

- JP 3626758 B
- JP 2004067997 A
- JP 2004537622 A
- US 5408035 A
- JP 3073498 B
- JP 2005500298 A
- WO 2004058852 A1
- JP 2005273293 A
- JP 2005253286 A
- JP 2005259383 A
- JP 2006129284 A